**Europäisches Patentamt**

**European Patent Office**

**Office européen des brevets**

(19)

(11) Publication number: **0 015 131**
**A1**

(12) **EUROPEAN PATENT APPLICATION**

(21) Application number: **80300461.3**

(22) Date of filing: **18.02.80**

(51) Int. Cl.³: **F 03 D 11/04**
**F 03 D 1/02**

(30) Priority: **19.02.79 IE 315.79**

(43) Date of publication of application:
**03.09.80 Bulletin 80 '18**

(84) Designated Contracting States:
**AT BE CH DE FR GB IT LU NL SE**

(71) Applicant: **Gilchrist, Timothy Michael**
**Mavis Bank**
**Newrath Waterford(IE)**

(72) Inventor: **Gilchrist, Timothy Michael**
**Mavis Bank**
**Newrath Waterford(IE)**

(74) Representative: **Ritter, Stephen David**
**Mathys & Squire 10 Fleet Street**
**London EC4Y 1AY(GB)**

(54) Support structure for wind-powered electric generators.

(57) The generator and wind-powered rotor (9) are carried by a horizontal beam (1) located above the surface of the earth, the beam being anchored to anchor means (14) on the surface by a system of flexible cables (12, 13) such that the beam (1) may move in a circular path around the anchor (14) to face the rotor (9) into the wind, irrespective of the direction of the wind. The beam (1) is preferably mounted on a vertical lattice tower (2) to form a crane-like structure of the centilever type. The tower (2) may be movable on wheels, trolleys, railway cars or the like, or on a floating, semi-submersible or submersible platform located at sea. In another embodiment the beam (1) is carried by a lighter-than-air vehicle. Preferably a plurality of support structures each carrying a rotor (9) are interconnected to form a multi-module array which is movable as a whole around anchor means (14).

Fig.1

Support structure for wind-powered electric generators

The invention relates to improvements in wind-powered electric generators and is particularly concerned with support structures for such generators.

The study of solar energy and its practical application has been of academic interest for many years, but it was the world oil crisis in 1973-74 that provided the incentive to confront in a realistic way the many complicated and difficult problems associated with applied solar energy. Solar energy may be divided into four main fields of secondary energy forces - (a) direct sunlight i.e. heat and light, (b) wind, (c) waves i.e. marine forces generated by wind, and (d) water - i.e. hydro electric from rainfall and thermal marine i.e. differential temperatures between deep water and ocean surface. For the maximum development of solar energy, these four main energy elements must be developed in direct relation to each forces specific energy contribution, having regard to its nature in time and place. The well known advantages of wind energy are that it is: free, unlimited, perpetually renewable and from the environmental aspect completely non-polluting. All these positive factors, unfortunately, are usually over-emphasised by enthusiastic alternative energy advocates, without consideration of its many and formidable disadvantages. These major problems are its complete lack of control in time, speed or force, temperature, direction, location and season. These normal functions of universal meterological conditions over surface of world do not lend themselves to any form of scientific control, in spite of many such attempts in the past. In most of the wind energy research completed to date over the last 20 - 30 years, lack of full appreciation of these disadvantages and constraints have inhibited the full development of wind energy and its massive potential contribution to energy starved world economics.

In the course of a Research Study on the Theory and Practice of Wind Energy - Electricity Generation, the present applicant carried out an in-depth study of every known wind energy system in existence since approximately 1950, both in Europe and to a lesser extent in the U.S.A. Without exception every system was found to be a complete interdependent entity, i.e. an integral combined support tower and wind rotor.

From earliest times, all traditional windmills as used for corn grinding and flood control consisted of a massive stone or timber central tower supporting an up-wind four bladed timber and canvas rotor. From about 1900 onwards, with the advent of steel or cast iron lattice towers, most large scale electricity generating wind turbines were of the down-wind variety in relation to the support tower, which general system persists to the present day.

As a result of practical experience from some large size units, recently erected for test purposes in the U.S.A. - Ohio, New Mexico and North Carolina - it was found that the large two blade high speed rotor on a lattice tower is not a complete success.

Essential to the study of modern wind power are many important technical publications such as "The Generation of Electricity by Wind Power" by E.W. Golding, first published in the U.K. (1955) and "Power from the Wind" by Palmer C. Putnam, published in the U.S. (1948). Both publications are most comprehensive and may be considered the starting point of all wind energy research since 1948 to date. In E.W. Golding's book, are listed all the major wind power electric generator plans ranging from the giant Honnef (1945) design with tower height 785 feet to the large number of European, U.K. and Russian designs varying from 160 feet to 100 feet tower heights. Palmer C. Putnam's work deals specifically with the entire research and construction programme for the ill-fated Smith Putnam Wind Generator built at Grandpas Knob, near Rutland, Vermont, U.S.A. which came on line in 1941. On 25 March 1945 this brilliant experiment ended with the failure and breaking of one 8-ton blade, which could not be economically replaced at the time.

From 1946 onwards to 1968 most wind energy research was carried out by the E.R.A. (Electrical Research Association) of Surrey in England. This institution's publications and translations from many foreign sources on wind energy research comprises one of the most important sources of confirmed and tested wind energy data. E.R.A. tests fully prove the feasibility and availability of the vast wind power available from North Atlantic winds on the N.W. coast of Europe.

From 1960 to date, the greatest source of wind energy research is the U.S. Government sponsored Wind Energy Research Programme implemented by a large number of U.S. Universities and private research establishments. Full details of this vast amount of practical and theorectical wind energy research are given in the various Proceedings of the major U.S. Wind Energy Workshops - ERDA sponsored held in Washington - 1973, 1975, 1977, and 1979 (not yet published).

International wind energy research to date is reported from every possible aspect in the Proceedings of the First (1976) and Second (1978) International Symposium on Wind Energy Systems held respectively in London and Amsterdam, and sponsored by the BHRD Fluid Engineering Organisation of Carnfield, Bedfordshire, England. A most comprehensive analysis of wind energy technology was given at the Advanced Wind Energy Systems Conference at Stockholm, August 29 - 30th 1974 under the auspices of the National Swedish Board for Technical Development, the Swedish State Power Board, and N.A.S.A.

In 1931 in Russia, at Yalta on the Black Sea coast, a 100 KW D.C. wind driven generator was erected on a combined lattice tower and rotatable rere inclined lattice wind force resisting strut. The base of the strut was provided with an electric trolley movable on a circular track, thus controlling the rotor orientation in relation to wind direction. The wind rotor on the unit is of the up-wind type only.

Of similar type construction, for down-wind rotor application only, is a rotating rigid-leg tripod support designed by the Folland Aircraft Co. Ltd. in 1951, and described in British Patent Specification No. 7 3,577. This rotor support unit's stability depends entirely on three rigid structural legs, the removal of any one of which causes complete collapse. It may be deduced therefore that the failure of all the above wind energy systems to reach practical fruition was due entirely to lack of suitable structural materials, which could withstand the full rigours and fury of the worst possible wind and weather conditions.

A study of more recent U.S. wind energy system patents failed to find any separate wind rotor supporting structures or multi-array rotor supporting structures or multi-array rotor supporting systems. U.S. patents 2,052,816 and 2,153,532 describe small complete wind energy systems with double two blade high speed rotors, and with single high speed rotor on upward tilting generator. U.S. patent 2,484,291 describes a high speed two bladed wind rotor cum variable air compressor on a fixed tower, with provision for a yaw mechanism to yaw the rotor in response to high wind-loading. U.S. patent 4,088,352 describes a wind driven rotor designed to tilt as a gyroscope in response to excessive wind forces, and is supported by a heavy full wind-load resistant structural system designed to swivel about its central vertical axis in response to wind orientation. One variation of the
arrangement described in this patent is designed for permanent fixing between
opposing conveyor walls.

In the design of all Wind Energy Conversion Systems (WECS) the basic wind power
formula usually applied is the Betz formula (A. Betz, Gottengen - 1927 - $KAV^3$ -
or many variations of the same) as the theoretical maximum power available from
the wind through a given swept area. In practice, however, the wind power available is usually no greater than .35 $KAV^3$ to .4 $KAV^3$ due to mechanical and aerodynamic imperfections of any practical WECS.

Since the 1973 renewed surge of interest in alternative energy sources, all
major test WECS erected have been of the single generator type, driven usually
by a high speed two blade wind turbine or motor. All have invariably failed.
Failure in all cases was due to - blade failure due to limited strength of
available blade materials - extremely complicated blade "feathering" and
"yawing" mechanism, - and wind shadow vibration forces from large support
tower structures in relation to blade width. All such units have in general
been limited in size to less than 300 ft diam. This small rotor diameter is
not calculated to deliver electric power of any enormous significance; 2 MW -
2.5 MW being the absolute maximum output under ideal conditions. This maximum
capacity is achieved only in winds up to a limited speed, thereafter the WECS
is designed to "feather" the turbine/rotor blade, which is of variable pitch,
to shed wind speed. Further increase by wind speed above the WECS "feathering"
capacity involves its "yawing" or furling out of the direct wind force by turning the entire wind turbine and generator unit which is situated on top of a
supporting tower, at right angles to wind direction. Still further increases
of wind speed involves complete close down of the WECS unit by braking the rotor
and generator to avoid complete destruction of the unit.

Such constrained approach to WECS design, ar its application to harnessing of
the tremendous energy freely available from e wind must, of its nature, achieve
only limited success - so limited in fact that it can never possibly make a
worthwhile contribution to world energy problems. From wind power tables based
on the Betz formula and modified Betz formula, it can be observed that realistic
and economic wind power is only available from swept areas much greater than
200 ft. Practical power diameters are shown to be from 300 ft to 600 ft diam.,

or greater if and when technically feasible. In the context of the modern industrial economy, however, even single WECS units of 300 ft - 600 ft. diam., would be considered of little or no significance, and it can be shown that large multi WECS units can possibly form the nucleus of a viable, economic and technically feasible WECS power system compatible with the standard National Electric Power Grid System universally used for power distribution.

It is an object of the invention to overcome the disadvantage of known wind energy conversion systems and to provide a support structure for a wind-powered electric generator which will enable the generator to operate efficiently in varying wind conditions without a major risk of breakdown, and which will support rotors of up to 600 ft in diameter.

According to the invention, a support structure for a wind-powered electric generator comprises a substantially horizontal load-carrying beam located above the surface of the earth and adapted to carry a rotor and generator, wherein the beam is anchored by means of a stabilising stay system connecting the beam to anchor means located at the surface of the earth and wherein the beam and/or the anchor means are movable in an arc relative to each other whereby the support structure may be maintained downwind of the anchor means and the rotor may face into the wind irrespective of the direction of the wind. Preferably, the anchor means is fixed and the beam is movable in a circle about the anchor means.

In a preferred embodiment the horizontal beam is mounted on top of a vertical tower to form a crane-like structure of the cantilever type. The whole crane-like structure is mobile and is rotatable about fixed anchors to which it is attached by means of the stabilising stay system. Preferably the stay system comprises at least one tensioned stay connecting the beam to the anchor means and at least a second stay connecting the tower adjacent the foot thereof to the anchor means.

In one embodiment the vertical tower and beam are mounted on a horizontal platform to which they are secured by a suitable system of stays. The platform is movable over the ground on suitable ground-contacting members such as wheels or tracks, the path of movement of the platform being constrained by tensioned stays connecting the platform and horizontal beam to fixed anchor means.

In another embodiment the ground-contacting members are wheels which are adapted to run on tracks which are disposed in a circle of which the anchor means defines the centre.

In yet another embodiment both the anchor means and support structure are movable on concentric tracks. The support structure and anchor means may each suitably be mounted on rolling stock, such as wagons or the like, movable on circular railway tracks.

In a preferred embodiment the platform carrying the vertical tower is located in a body of water, suitably the sea. The platform may float on top of the water surface but preferably is semi-submersible or fully submersible. Means are provided for moving the platform in a substantially circular path around a fixed anchor which is connected to the horizontal beam by a stabilising stay system. Preferably, means are provided for temporarily securing the platform to the sea-bed when it is stationary. The anchor means may be fixedly attached to the sea-bed or to a rock, small island or other land mass.

In order to obtain power output on a viable economic scale it is preferred to use a plurality of support structures, as described in any of the above embodiments, which are connected together to form a multi-module array which is movable as a whole about anchor means. The anchor means may comprise a single anchor, either fixed or movable, to which each of the modular structures is attached by a stabilising stay system.

The invention also includes a rotor mechanism comprising a rotary ring supporting the rotor blades and having fixedly attached thereto a plurality of main gear wheels, a support means for the ring comprising a plurality of rotatable tyred wheels arranged in a circle about the main beam and in fixed relation thereto, the wheels being in frictional contact with tracks on the inner surface of the rotary ring such that rotation of the ring causes the wheels to rotate, and secondary gear wheels for transmitting drive from the main gear wheels to a drive shaft connected to the generators. The invention also includes braking means for the system comprising conventional drum or disc brakes which act on the wheels and thereby retard or stop rotation of the rotary ring. A second braking system is also preferably provided comprising a magnetic brake acting on the inner surface of the ring.

Some embodiments of the invention are hereinafter described with reference to the accompanying drawings, wherein:

Figure 1 is a side elevation of a first embodiment of a WECS support structure according to the invention;

Figure 2 is a front elevation of the structure of Figure 1;

Figure 3 is a plan view of the structure of Figure 1;

Figure 4 is a longitudinal section, to an enlarged scale, of a rotor support unit for use with the structure of Figure 1;

Figure 5 is an enlarged sectional view of a detail of the unit of Figure 4;

Figure 6 is a section on the line 6 - 6 of Figure 4;

Figure 6a is a part section on the line 6a - 6a of Figure 4;

Figure 6b is a part section on the line 6b - 6b of Figure 4;

Figure 7 is a side elevation of the structure of Figure 1 to a smaller scale with the WECS rotor upwind of the support structure;

Figure 7a is a side elevation of the structure of Figure 7 to a smaller scale with the rotor downwind of the structure;

Figure 8 is a plan view of a second embodiment of the invention utilising a plurality of support structures;

Figure 9 is a front elevation of the structures of Figure 8;

Figure 9a is a front elevation of a modified form of the structure of Figure 8;

Figure 10 is a plan view of a third embodiment of the invention;

Figure 10a is a plan view of a modified form of the structure of Figure 10;

Figure 11 is a plan view of a fourth embodiment of the invention using a fixed anchor system;

Figure 12 is a front elevation of the structures shown in Figure 11;

Figure 13 is a plan view of a fifth embodiment of the invention utilising a mobile anchor system;

Figure 13a is a plan view to a smaller scale of the embodiment of Figure 13 using a double mobile anchor system;

Figure 13b is a plan view to a smaller scale of the embodiment of Figure 13 using three anchors;

Figure 13c is a diagrammatic front elevation of the arrangement shown in Figure 13;

Figure 14 is a plan view of part of a sixth embodiment of the invention utilising rolling stock as an anchor system;

Figure 14a is a plan view of a modified form of the structure of Figure 14;

Figure 15 is a front elevation of the arrangement of Figure 14;

Figure 15a is a front elevation of a modified form of the arrangement of Figure 14;

Figure 15c is a front elevation of a modified form of the structure of Figure 15;

Figure 16 is a side elevation of the cross-section of Figure 14;

Figure 16a is a side elevation of a modified form of the arrangement of Figure 16;

Figures 16b and 16c show details of anchoring arrangements for the structure of Figures 14 to 16 and 16a;

Figures 17 and 18 show details of rolling stock utilised in the arrangement of Figures 14 - 16;

Figure 19 is a side elevation of a seventh embodiment of the invention located in medium water depths;

Figure 20 is a plan view of an arrangement utilising a plurality of the units shown in Figure 19;

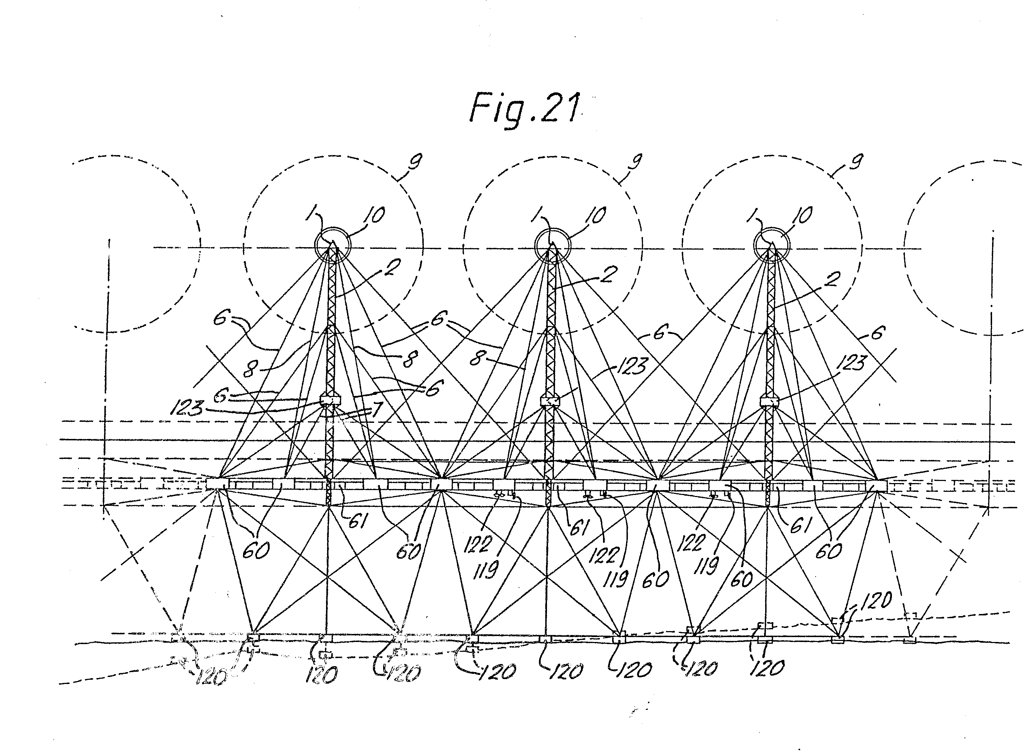

Figure 21 is a front elevation of the arrangement shown in Figure 20;

Figure 22 is a side elevation of an eighth embodiment of the invention for use in shallow waters;

Figure 23 is a side elevation of a ninth embodiment of the invention for use in very deep waters;

Figure 24 is a diagrammatic plan illustrating a method of anchoring the structures shown in Figures 19 to 23;

Figures 25, 25a and 25b are diagrammatic illustrations of a method of using an island to anchor water-borne structures of the invention;

Figure 26 is a side elevation of an air-borne structure of the invention;

Figure 27 is a plan view of an arrangement utilising a plurality of the structures shown in Figure 26; and

Figure 28 is a diagrammatic front elevation of the air-borne system shown in Figure 27.

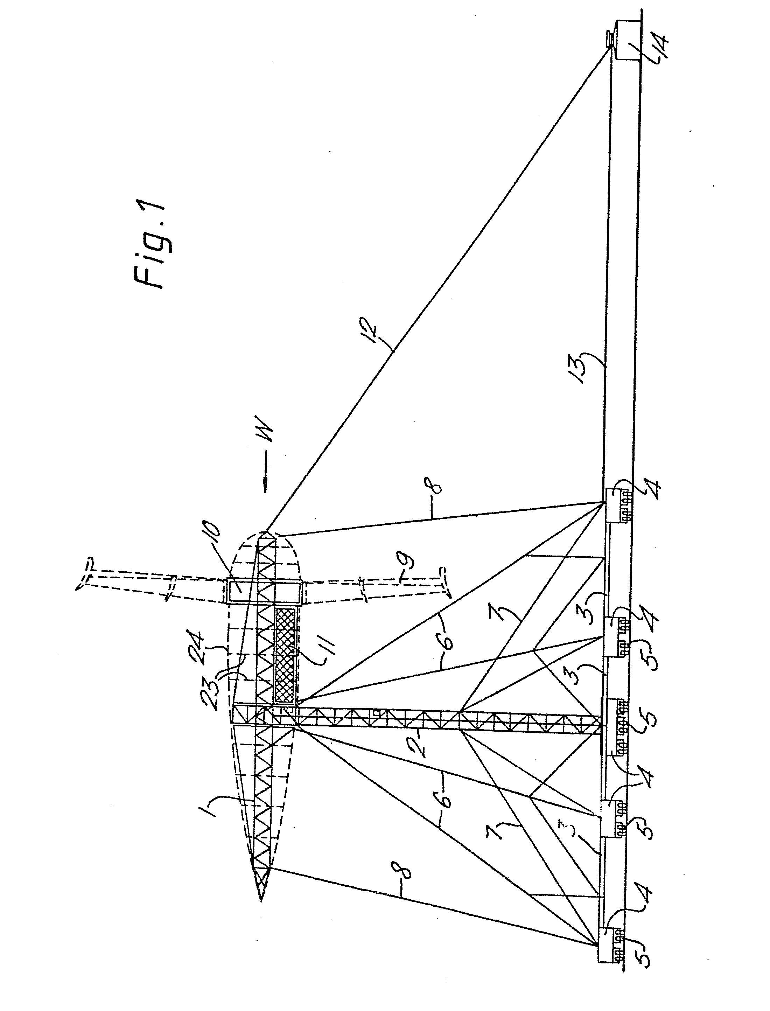

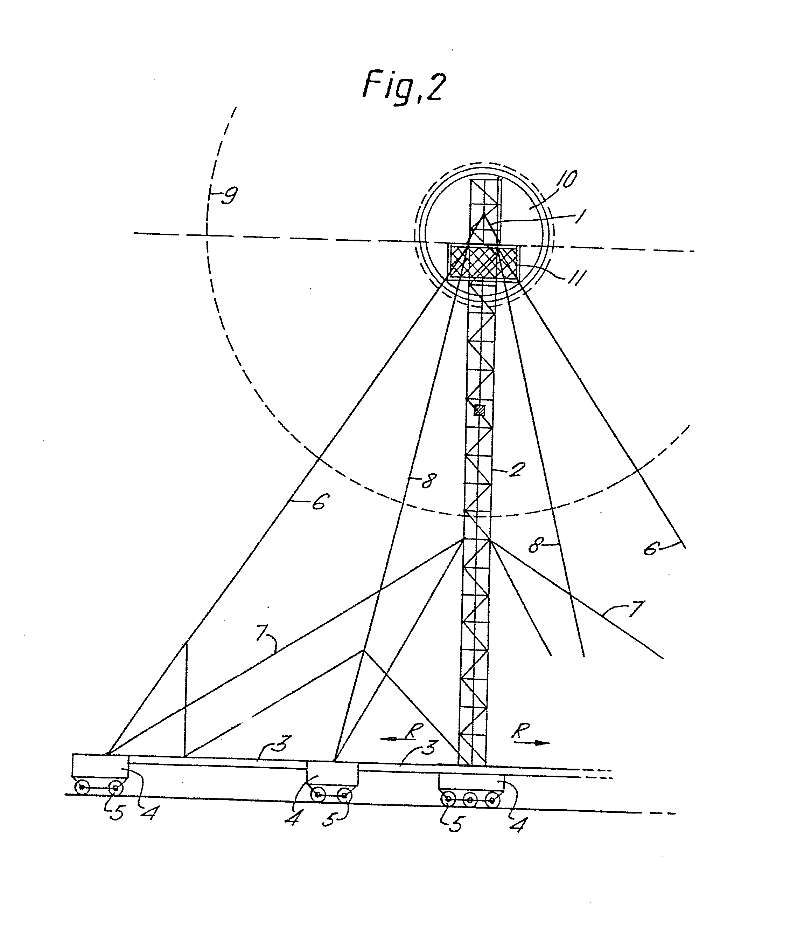

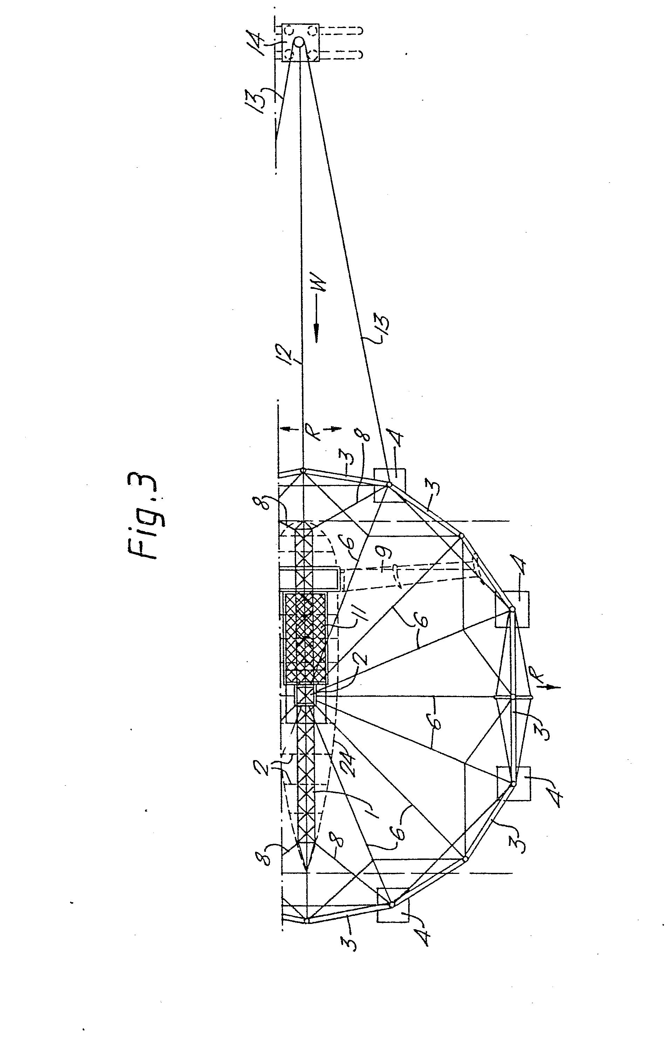

Referring to Figures 1 to 3, 7a and 8 of the drawings, a support structure for a wind-powered electric generator comprises a substantially horizontal load-bearing beam 1 which suitably is constructed as a lattice girder. The beam 1 is carried a suitable distance above the surface of the earth on a vertical tower 2 which also may be constructed as a lattice girder. The beam 1 is mounted cantilever fashion on the tower 2 and it will be appreciated that together they form a crane-like structure which is particularly stable. The tower 1 is positioned on a flat horizontal platform 3 which, as shown in the drawings, is polygonal in plan, but which can be circular or of other suitable shape. The platform 3 is mounted on a plurality of trolleys 4 which comprise massive balancing loads carried on wheels 5. Thus, by means of the wheeled-trolleys 4 the platform can be moved over the ground. The wheels 5 may be pneumatic wheels movable on a prepared surface or of the steel flanged type movable on railway tracks. It will be appreciated that alternative means may be provided for moving the platform 3 such as, for example, caterpillar tracks, skids or hoover pads.

The tower 2 is held in position on the platform 3 by means of tensioned stays 6, 7 which are connected to the perimeter of the platform 3. The beam 1 is held in horizontal position by means of stays 8 which also are connected to the perimeter of platform 3. Neutral structural stability for the structure is obtained by the massive balancing loads of the trolleys 4. The beam 1 supports a rotor 9, rotor support mechanism 10 and a generator room 11 which are described in more detail below. The beam 1 also acts as a crane unit which may be used to lift wind turbines, generators, gears, drive shafts, switchgear and the like into position.

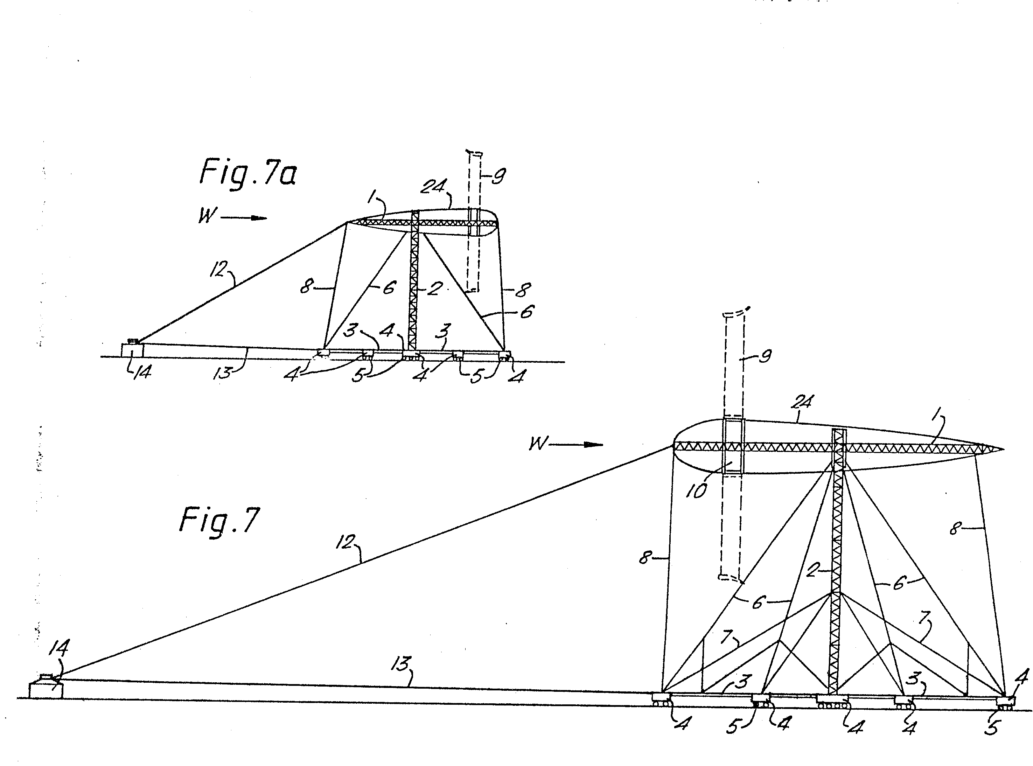

Live structural stability and anchoring of the structure is obtained by means of stays 12, 13 which are attached at one end to the beam 1 and platform 3 respectively, and at the other end are rotatably connected to a fixed anchor unit 14. The anchor 14 is firmly fixed to the ground by, for example, deep foundation piles. Because of the rotational fixing of the stays 12, 13 to anchor 14 the whole support structure can travel on wheels 5 on a circular path of which the anchor 14 is the centre and which has a radius substantially equal in length to the length of stay 13. In this way the structure can always be positioned downwind of the anchor 14 as shown, for example, in Figure 7 in which the direction of the wind is indicated by W. Preferably, the stays 12, 13 are connected to the front of the structure so that the rotor 9 is positioned to windward of the tower 2 thus avoiding wind shadow vibration. Alternatively, the rotor can be positioned to the leeward side of the tower 2, as shown in Figure 7a, in which case there may be some wind shadow vibration but this is kept to a minimum because of the narrow width of tower 2 relative to the size of the rotor blades.

Complete structural resistance to all wind forces may be achieved by means of the tensioned stays 1 , 13 and this coupled with the structural stability of the crane-like support structure means that rotor blades of up to 600 ft in diameter may be utilised and can be operated in high wind speeds where conventional W S would have to be closed down.

- 10 -

00l5l3l

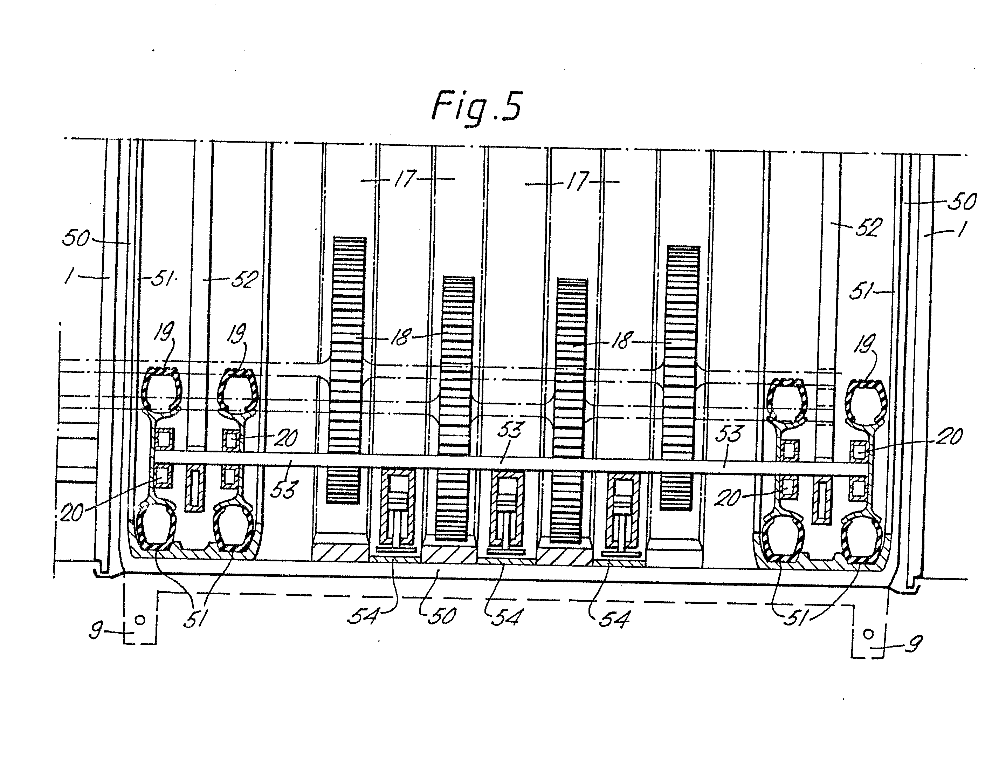

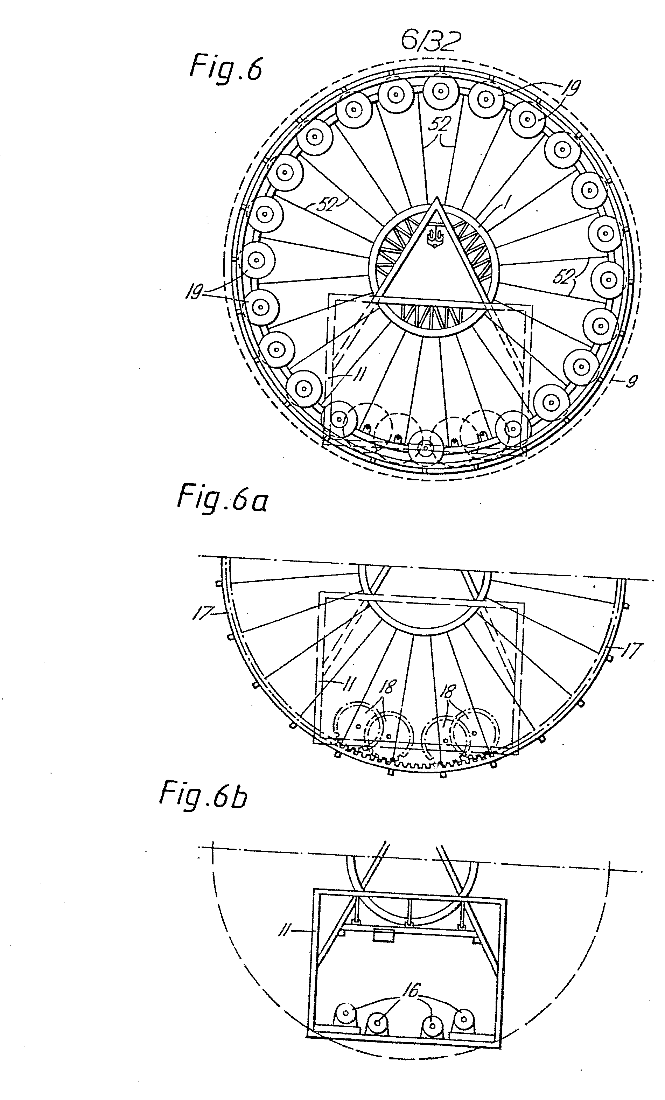

The generator room 11 and rotor support means 10 are shown in more detail in Figures 5 to 6b. The generator room 11 contains any number of AC and/or DC or other electric generators 16 of sufficient capacity and number equal to the calculated power output of the wind turbine. The rotor blades 9 are fixed to a rotary ring 50, to the interior of which are fixedly attached a plurality of main internal gear wheels 17. The inner surface of the rotary ring 50 is formed with a plurality of annular channel-shaped tracks 51 which receive the tread and side-wall portions of rotating twin pneumatic tyred wheels 19 which may, for example, be in the form of conventional truck wheels. The wheels 19 extend around the inner perimeter of the ring 50 and are held in fixed relation to the lattice structure of the beam 1 by means of spokes 52. Thus, the ring 50 and tracks 51 rotate around the assembly of wheels 19 which in turn are caused to rotate about axles 53. The axles 53 are in fixed relation to the beam 1. The frictional connection between the tyres of wheels 19 and tracks 51 can be adjusted by varying the air-pressure in the tyres. The wheels 19 act to stabilise and support the rotor mechanism and preferably the air-pressure of the tyres in the uppermost segment of the wheel array, as shown, for example, in Figure 6, is maintained at a higher level than those in the lowermost segment.

Torque from the rotor blades 9 is transmitted by the gear wheels 17 through secondary gear wheels 18 to a drive shaft driving the generators in well known manner. The generators are preferably used to control rotation of the rotors. When wind speed is low it is preferred to use AC generators only which can feed directly into a national power grid. If wind speed increases above about 20 mph the DC generators (or AC generators with converters) can be brought into operation. These impose an enormous frictional load on the rotor and so act as a brake on the system.

Power output from the DC generators can be used, for example, for hydrogen generating systems, for steel smelting, or for powering a pump storage scheme, and is particularly suitable to provide a source of hydrogen and oxygen for recovery of oil from Tar Sands and heavy oil deposits, and for secondary oil recovery from existing oil wells which have been abandoned due to congealing by wax and heavy oil residues.

In order to close down the turbine, for example for maintenance or in an emergency, there is provided a braking system for the wheels 19 in the form of conventional drum or disc brakes 20 which may be hydraulically operated. Braking may also be carried out by means of magnetic brakes 54 which act on the inner surface of ring 50. Alternatively, in place of drum brakes 20 there may be used induction type electric generators in part or all of the rotor supporting planetary wheel system. Sufficient generators may be installed to deliver full power output for wind speeds of up to 70 mph, while simultaneously maintaining rotor speed control by induction electric braking, i.e. D.C. injection, to some of the generators. Generator location is shown 20a in Figure 5. As a further alternative, or in addition to, the drum brakes 20, there may be installed rotary hydraulic pumps in part or all of the rotor supporting planetary wheel system. These hydraulic pumps may be connected together or may supply (by suitable hydraulic pipe lines), hydraulic motors cum electric generators situated in the generator room, or elsewhere on the structure.

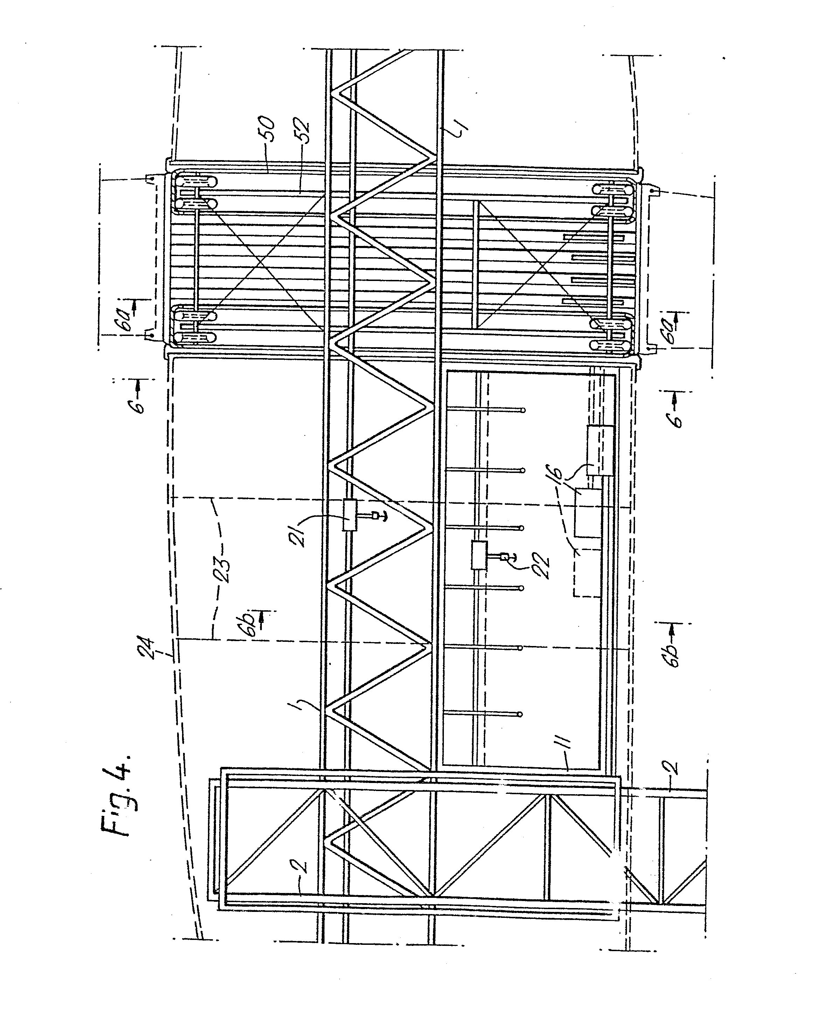

As shown in Figures 4 and 6 the horizontal beam 1 is preferably provided with cranes 21 which move on crane tracks 22 and which may be utilised to move generator and rotor mechanism. As shown more clearly in Figures 1 and 4 the beam 1 is provided with a plurality of fixed circular support members 23 which support a cone-shaped membrane 24 which covers the beam, generator room and rotor mechanism. The conical configuration of the cover membrane 24 increases the wind speed through the wind turbine swept area.

The stays 12, 13, 6 and 8 may be made from high tensile strength steel wire but preferably are of sheathed polyamide filaments (for example of the kind sold under the trade name "KEVLAR" or "PARAFIL"). This cable is of greater tensile strength than its equivalent steel wire rope, and over three times stronger than all earlier types of synthetic cable. A most important technical aspect of this new cable, which makes it an ideal material for use in the construction of large scale wind energy systems according to the invention, is its density or weight factor in relation to traditional steel cables of equivalent breaking strain. It varies from one fifth to one seventh the weight of equivalent steel cable. By use of this immensely strong synthetic cable, extremely long tensile structural members may be formed with minimum catenary curves than would be possible with equivalent strength steel cable.

In addition to having great tensile strength coupled with minimum weight, synthetic sheathed "PARAFIL" or "KEVLAR" cables are fully resistant to sea water and all marine organisms; to sunlight and UV degradation; and also to ordinary fatigue, abrasion and frictional shear. Being also completely mist and corrosion proof, grease or other protective coating is completely unnecessary.

Critical factor in the use of sheathed "PARAFIL" and "KEVLAR" cables in the construction of extremely large scale wind energy systems are their resistance to icing; or build up of heavy ice. Tests on "PARAFIL" and "KEVLAR" rigging on ships under Arctic conditions have shown that ice build up is impossible; any ice adhering to cables being shed by natural vibration of the taut cables. A further less obvious advantage is reduced interference to television and radar signals.

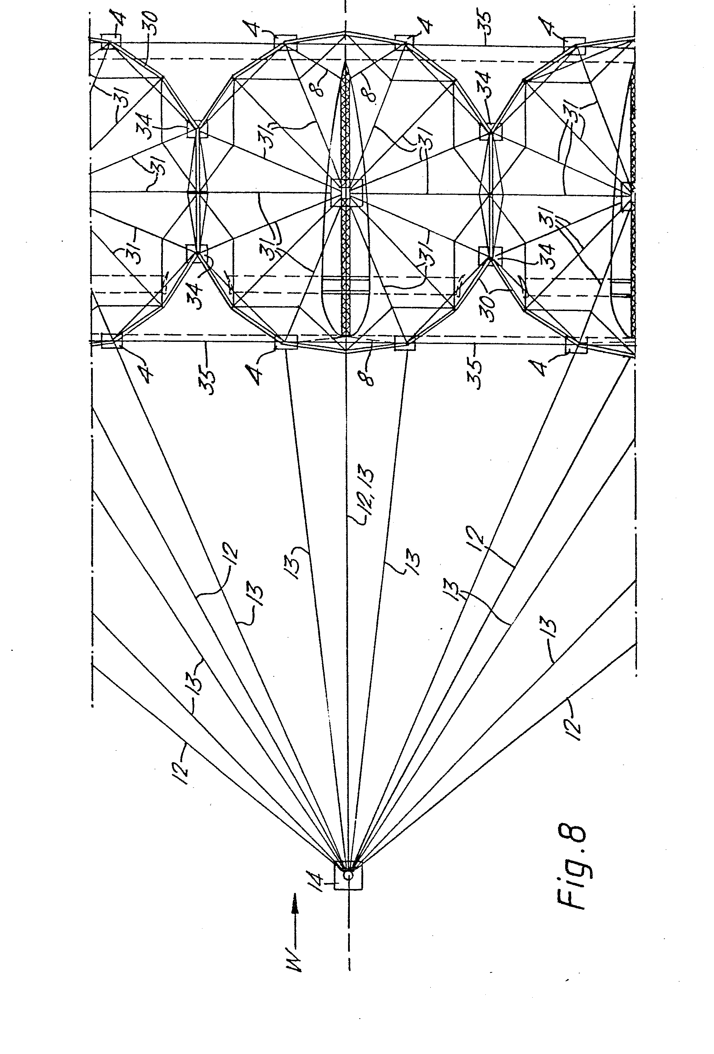

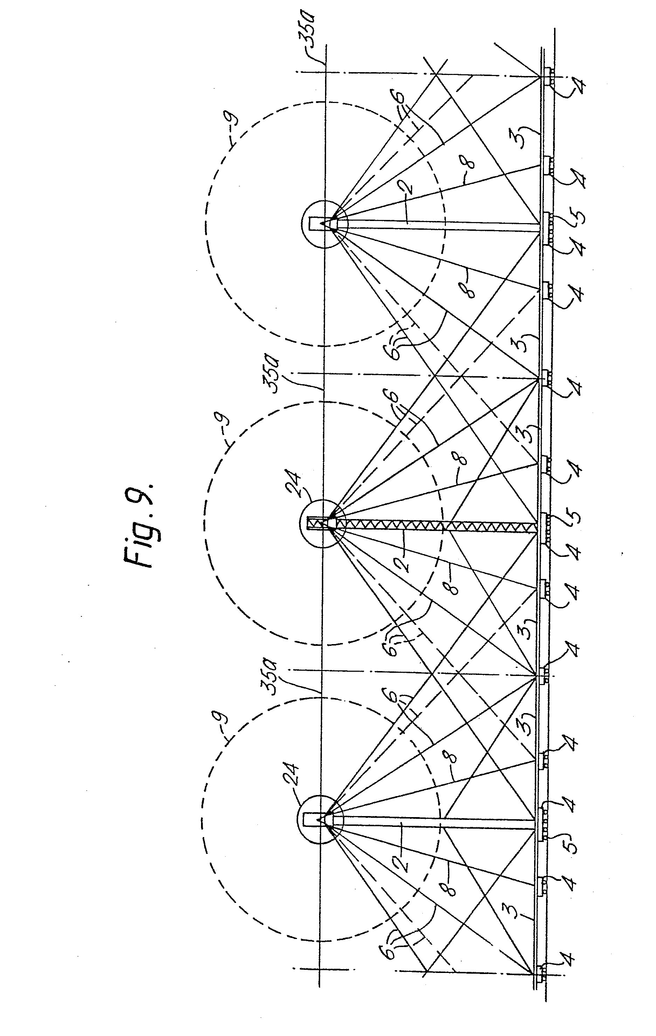

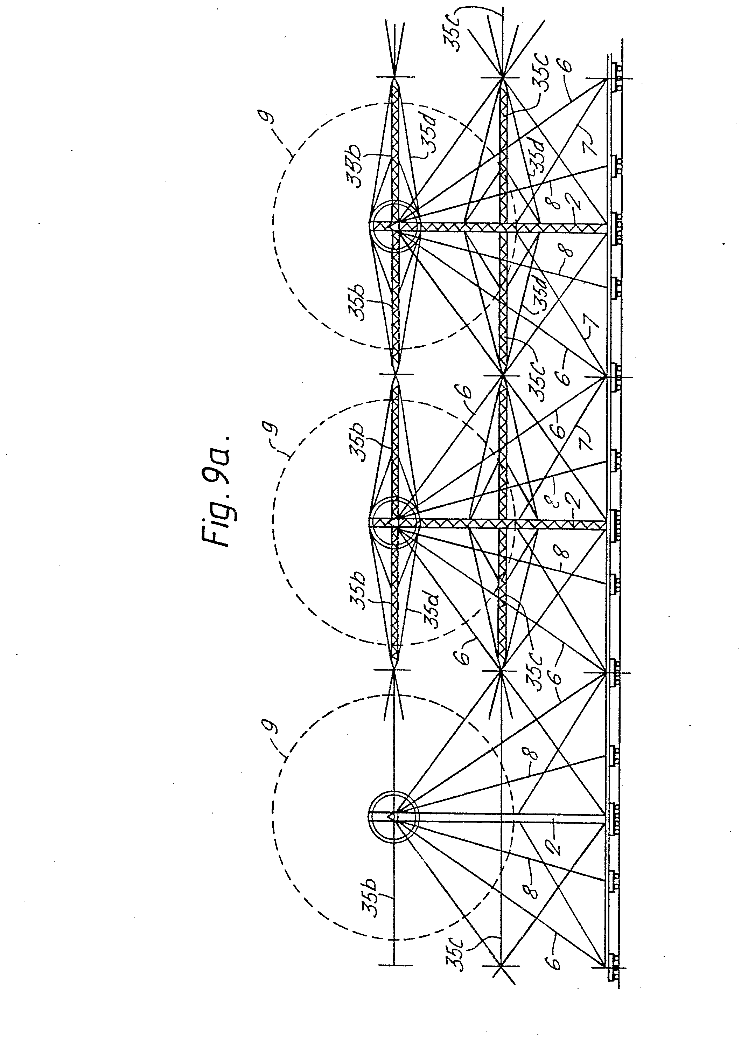

In order to obtain power output on a viable economic scale it is preferable to use a plurality of WECS units and one embodiment of such a multi-module system is illustrated in Figures 8 and 9. In this arrangement the support structure for each modular unit is substantially as described with reference to Figures 1 to 3 and like reference numerals are used to denote like parts. In this embodiment the perimeter of each horizontal support platform 3 is formed of rigid compression members 30 which are connected to the foot of the vertical tower 2 by tensioned radial members 31 to form an extremely rigid but light platform. As with the construction of Figure 1 the platform 3 is carried on trolleys 4 which include massive balancing loads which give neutral structural stability to the platform. Each platform 3 is connected to each adjacent platform by utilising trolley members 34 common to adjacent platforms and also by means of tensioned longitudinal members 35 which are fixed through all platforms to form an interconnected modular structure. A substantially horizontal tensioned system of stays 35a is utilised to interconnect the beams 1 of each of the units at high level to form in effect a longitudinal beam imparting further rigidity to the multi-module system.

In areas of extreme high wind velocities and violent fluctuations, or during intermittent severe storms, multi-modular structural resistance to dangerous vibrations and oscillations is achieved by increased rigidity of the high level centre tensile stays 35a of Figure 9. Figure 9a shows rigid latticed braced tensile beams 35b in position between highest sections of the supporting towers 2. Tensile stays 35d are used to support the beams 35b. Any number of horizontal rigid tensile stabilising beams 35b to achieve maximum required stability may be installed between the vertical towers 2-2 'A tensile beam 35c is shown in Figure 9a located intermediate the height of the tower 2, e.g. midway up the tower.

As shown more clearly in Figure 8 each modular unit is connected by tensioned stays 12, 13 to a common fixed anchor 14 about which the multi-module system can rotate as a whole.

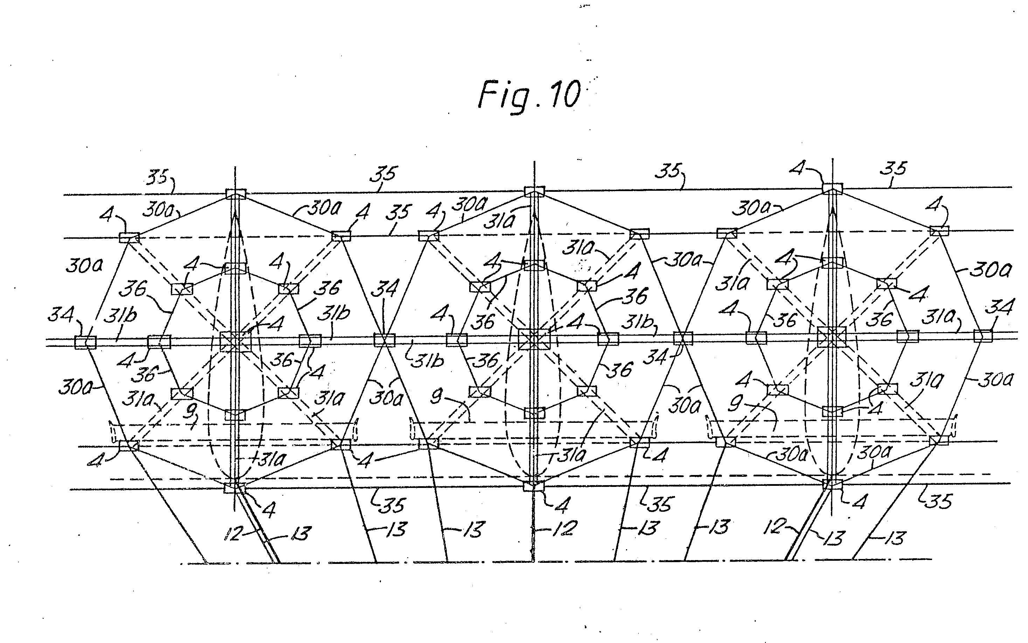

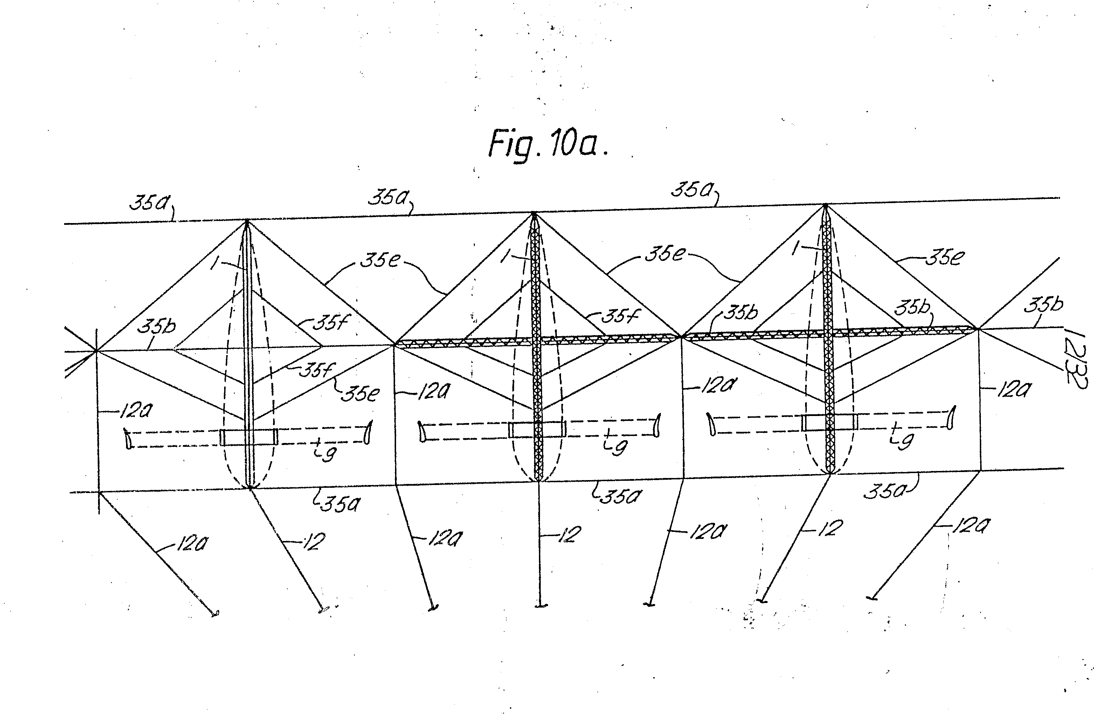

Another embodiment of a multi-modular system is shown in Figure 10. In this arrangement the perimeter of each platform 3 is formed of tensile members 30a which are connected to tower 2 by rigid compressive members 31a. Secondary tensile members 36 are disposed parallel to members 30a and interconnect the compressive members 31a to provide increased structural stability. Each platform 3 is interconnected with adjacent platforms 3 by a common longitudinal compressive member 31b and also by longitudinal tensioned members 30.

Figure 10a is a plan view of a rigid tensile beam system located at the level of rotor support beam 1, and shows the horizontal stabilisation of structure by tensile units, 33a, 35b, 35e and 35f. In the basic structural system as shown in Figure 1, the main wind forces acting on the structure are resisted by stay 12 which acts as the major tensile element. Wind energy research has shown, however, that a 500 ft. diameter multiblade rotor subjected to wind forces of up to 120 mph requires a stabilising tensile resistance of over 9,000 tons. This great tensile force may be carried by stay cable 12 as shown in Figure 1, or alternatively by a number of secondary tensile cables, 12a as shown in Figure 10a. Secondary main cables 12a connect to centre point of rigid tensile members 35a and 35b, and ultimately to the rear of main rotor support beam 1 via cable 35e.

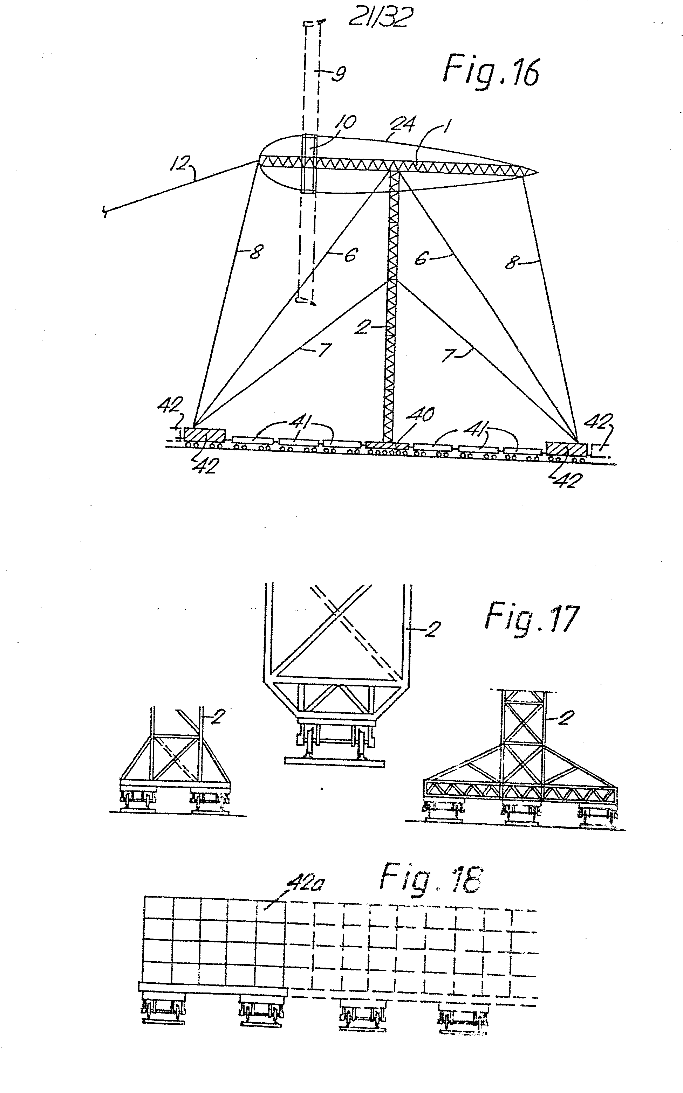

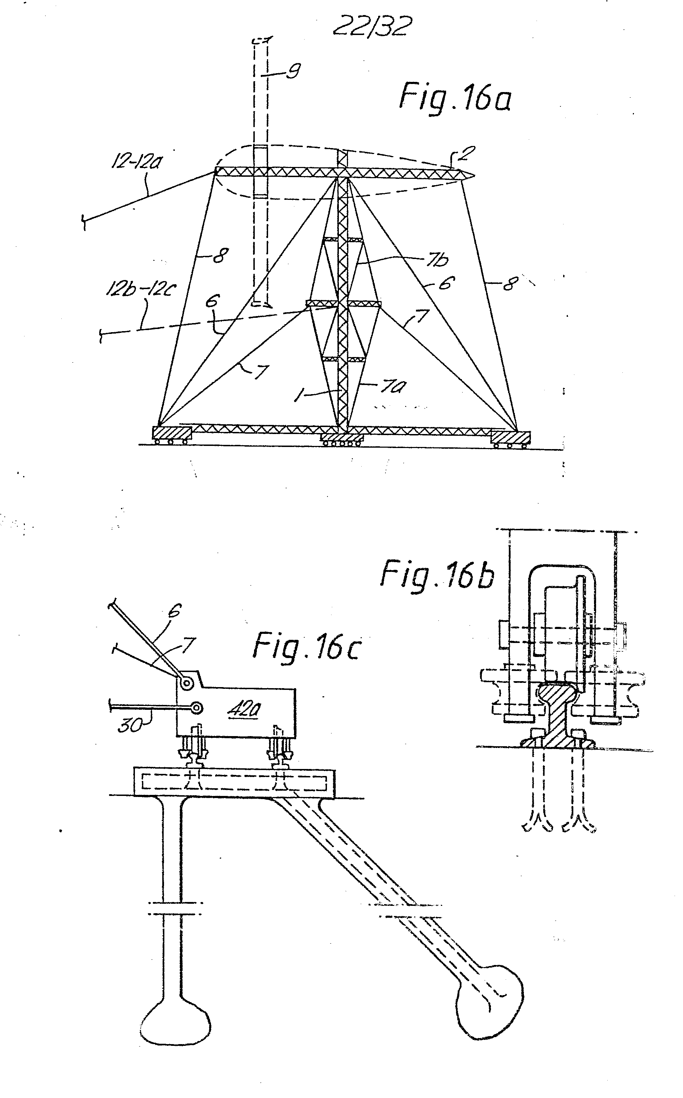

Further secondary main tensile anchorage cables 12b and 12c etc., may be attached, respectively, in a similar manner to the tower 2, and the centre point of lower transverse rigid tensile members 35c, as shown in Figure 9a and Figure 16a.

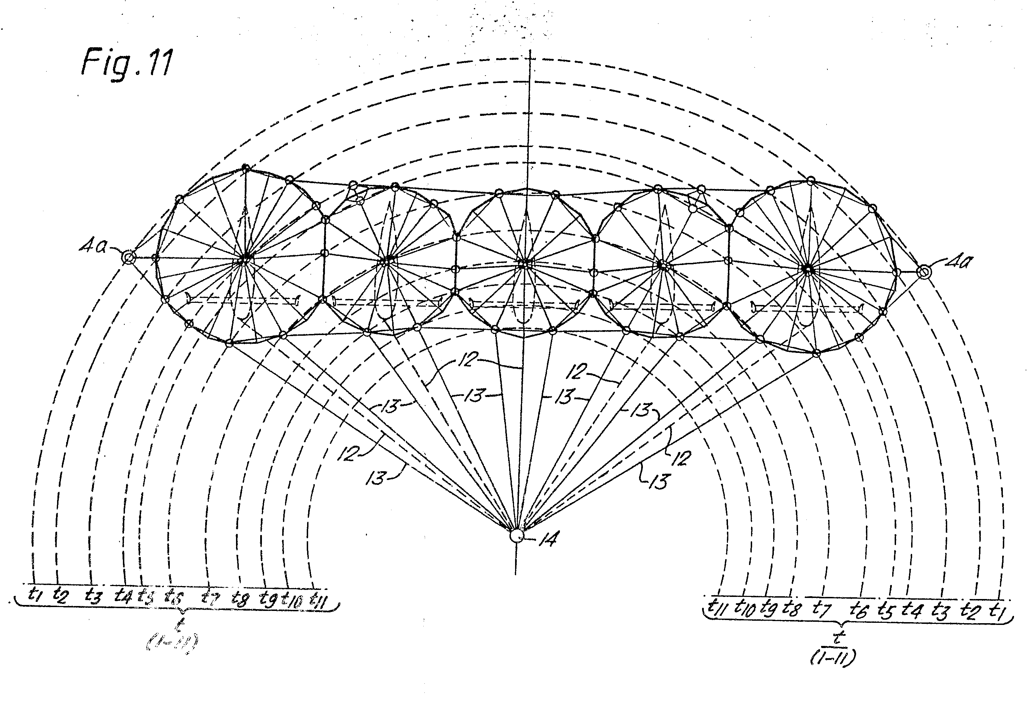

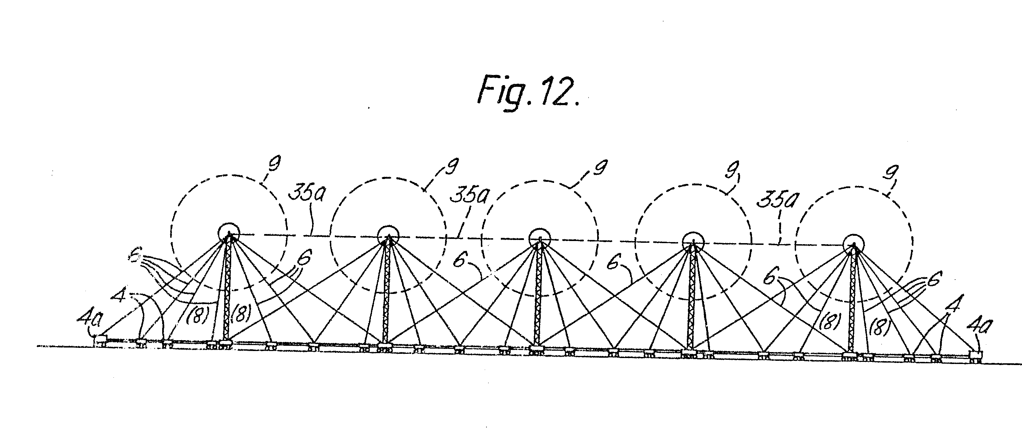

A five unit modular system is illustrated in Figure 11 and 12. Figure 11 is essentially a layout plan showing the lines of the circular paths followed by the wheeled trolleys 4 and these paths are designated by the letters $t_1$ to $t_{11}$ Each path may comprise a track or road having a prepared surface in which case the ground conta ting members of trolleys 4 may be in the form of pneumatic tyred wheels or hooverpads or alternatively the paths may be in the form of railway or other flanged traci s. As shown more clearly in Figure 12 there is provided on a special heavy duty track or road $t_1$ at the two extremities of the system an independent extra heavy weight mobile anchor unit 4a which preferably is used with all embodiments of multi-unit systems because it ensures structural stability of the entire vertical structure. The entire multi-unit system is moved along paths or tracks $t_1$ to $t_{11}$ by means of a system of electric motors and variable gearing carried by each trolley 4.

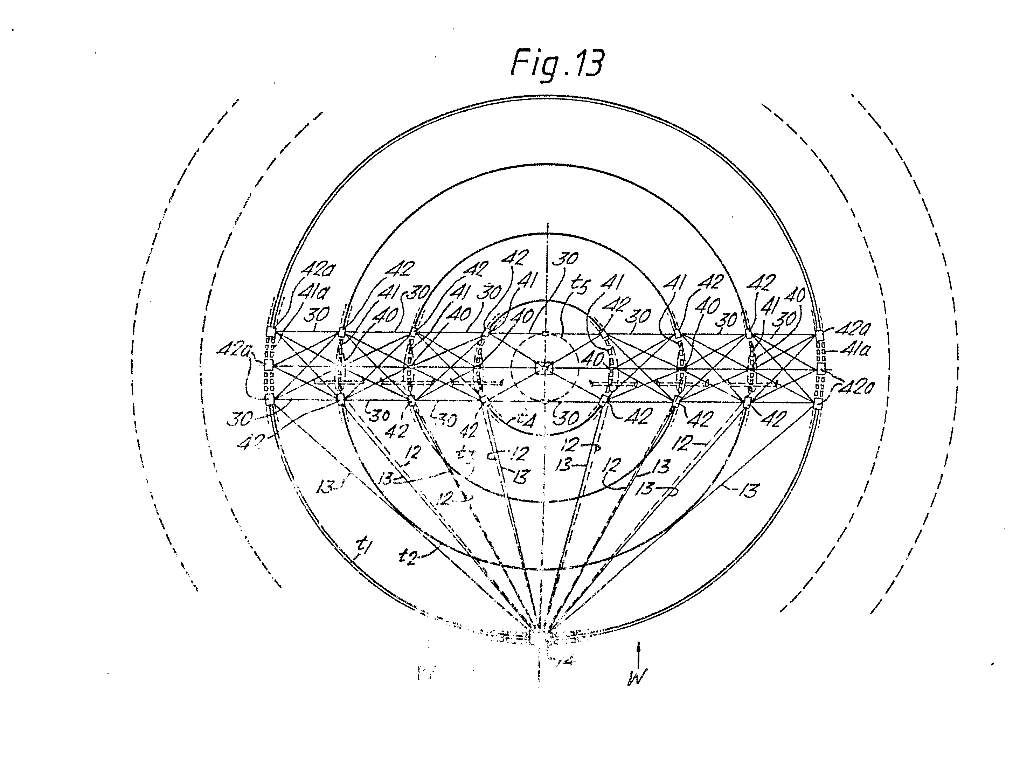

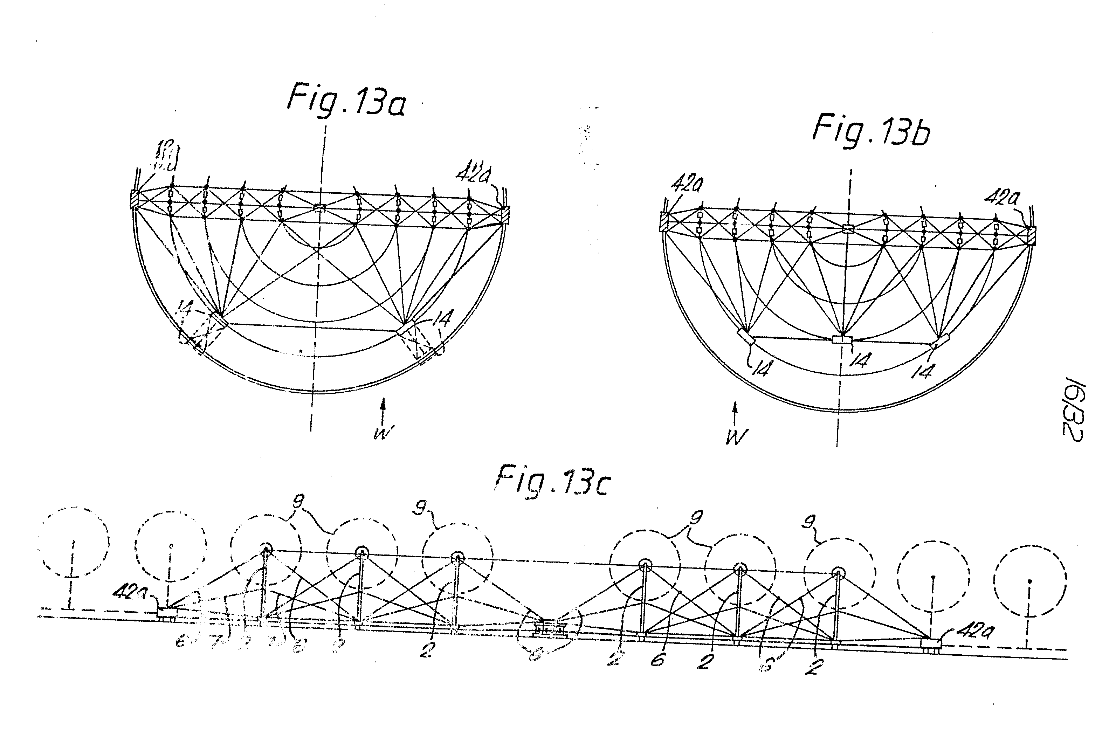

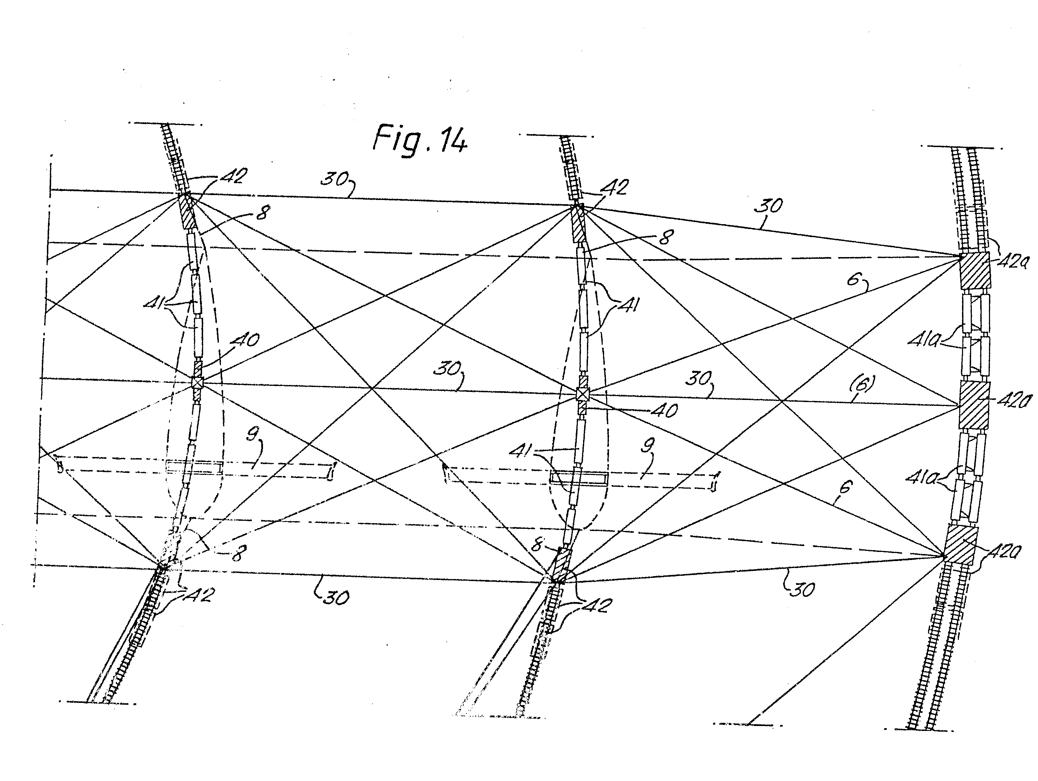

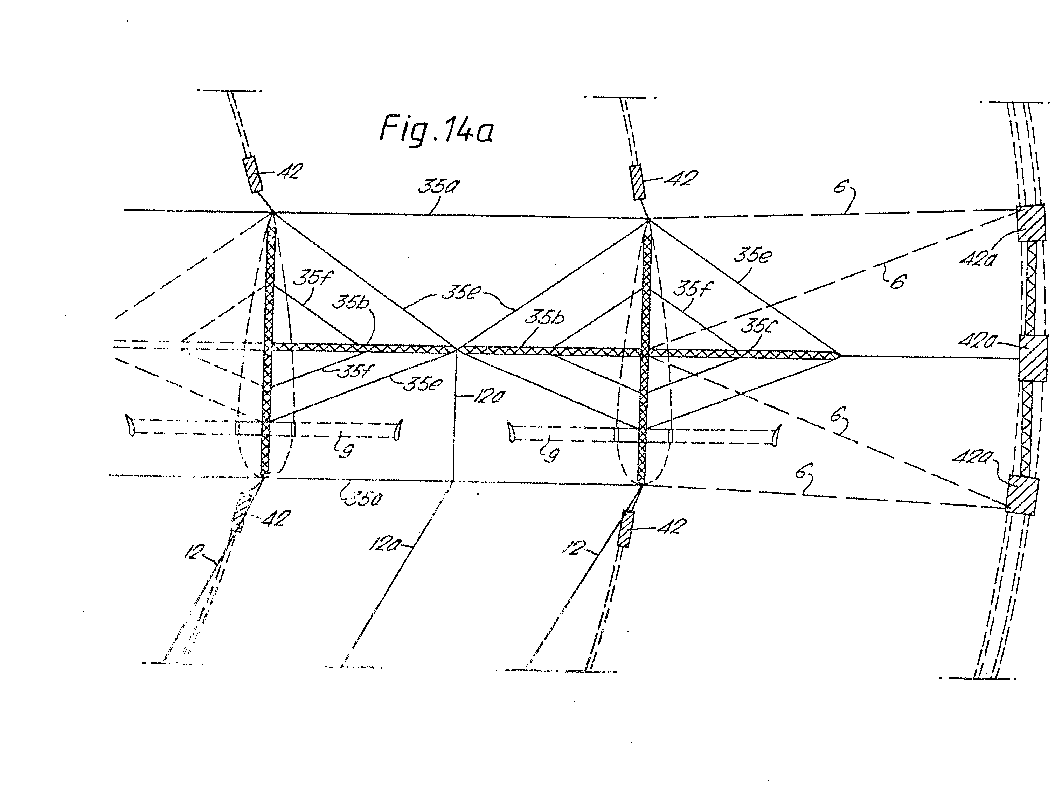

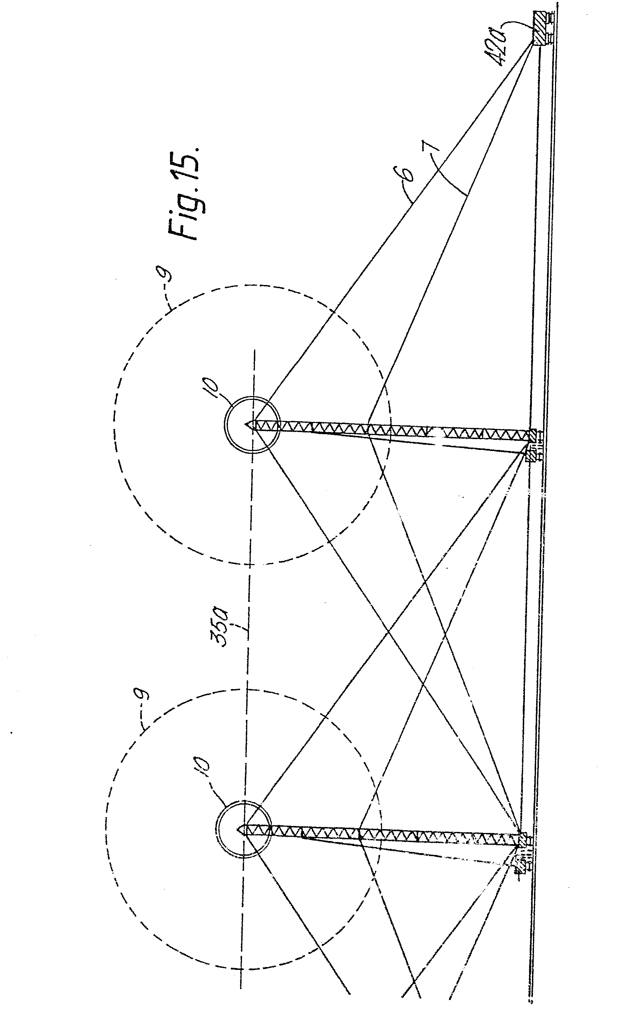

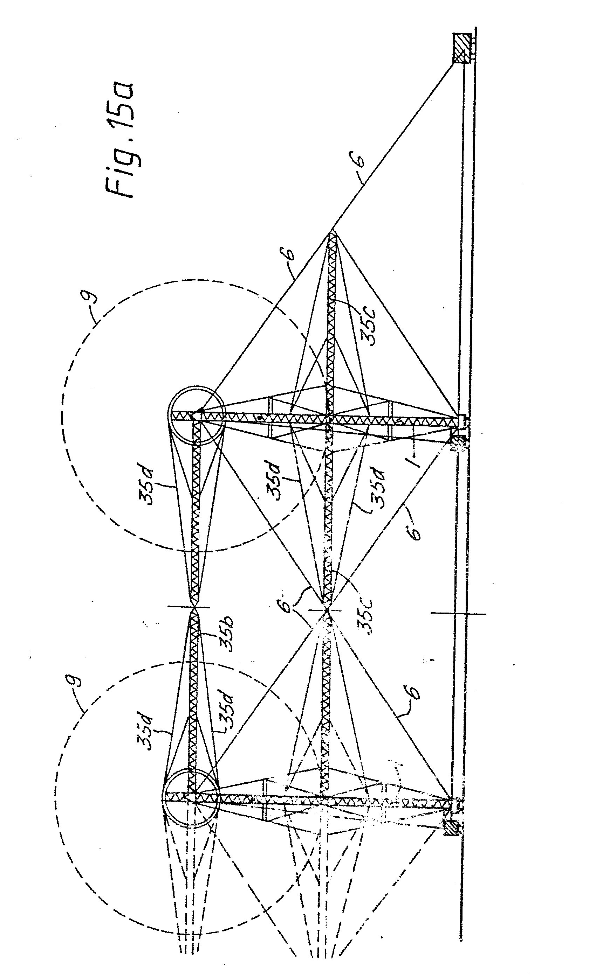

In yet a further embodiment illustrated in Figures 13 to 18 there is provided a mobile anchor system such that both the anchor means and the array of modular units are movable on concentric paths. Preferably, in this embodiment the paths are in the form of railway or like tracks $t_1$, $t_2$, $t_3$, $t_4$ and $t_5$. As shown most clearly in Figure 16 the platform 3 is dispensed with, and each tower 2 is mounted directly on a wheeled railway flat or truck 40 which is firmly coupled on railway tracks to cars 41. The cars 41 can be loaded with balancing weights and there is preferably a sufficient length of combined rolling stock or cars to establish structural stability to the tower. Longitudinal stability to the tower is provided by tension stays 6, 7 and 8 which connect the tower and beam, respectively, to trucks 42 which carry massive anchor weights. Lateral stability for the towers may be provided also by tension stays 6a, 7a and 8a which connect the tower and beam, respectively, to loaded anchor trucks 42a which run on tracks parallel to and concentric with the tracks on which the tower 1 moves. The trucks 42a are interconnected by means of cars or other rolling stock 41a which may also be loaded if necessary. Each modular unit of the multi-unit system is interconnected by means of longitudinal tensioned members 30 to form a single structural array which, as shown in Figure 13, is movable as a whole about tracks $t_1$ to $t_5$. Each of the structural units is connected by means of tensioned stays 12 and 13 to a single anchor 14 which also is in the form of rolling stock carrying a massive load. As shown in Figures 13a and 13b there may be two, three or more mobile anchor units 14. Indeed, there is no limit to the number of rolling stock or primary mobile anchor units which may be used in the system to the maximum capacity of the circular tracks. Figure 14a is a plan of a rigid tensile beam system to interconnect the towers 2 at the level of beam 1 similar to that described in relation to Figure 10a. Figure 15c shows rigid latticed braced tensile beams 35b positioned between the towers similar to the arrangement described in relation to Figure 9a above.

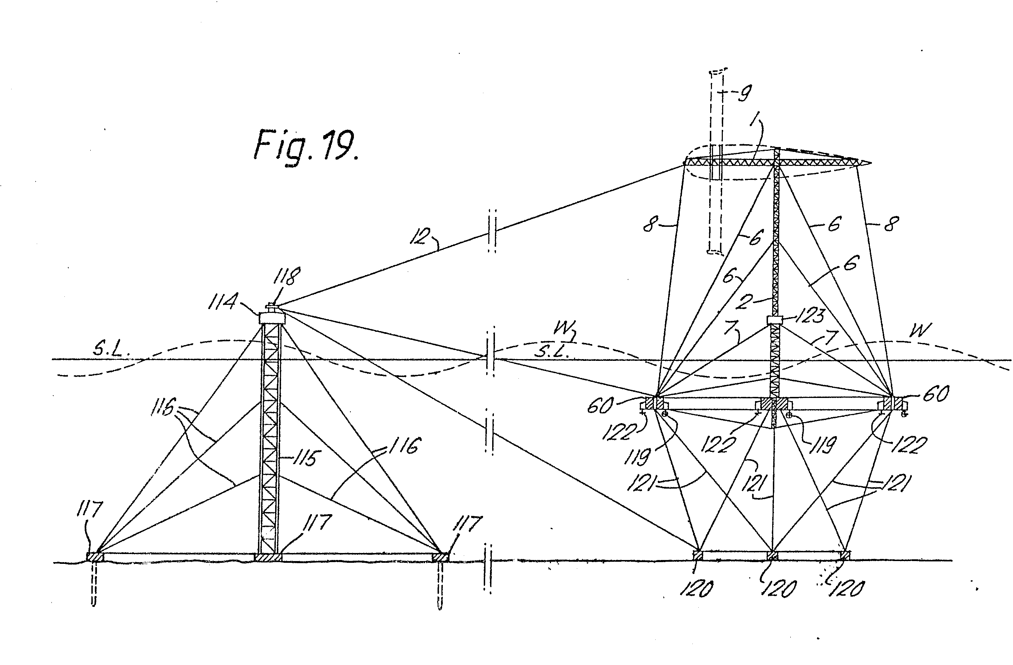

Details of alternative methods for mounting the tower 1 on rolling stock is illustrated in Figures 16 and 17. As shown in Figure 16, the tower 2 may be built on a truck movable on a single track. Alternatively, in the arrangements shown in Figure 17, the tower 1 is constructed on two, or three, flat trucks running on two or three concentric circular railway tracks. Figure 16a shows the use of rigid horizontal beams to reinforce the tower 1 and shows the location of the main stays 12, 12a and secondary stays 12b and 12c. Figure 18 illustrates the use of double, treble, quadruple tracks systems for supporting the balancing loads 42a. The loads may comprise, for example, large metal blocks or interlocking blocks made from aggregate concrete. As an alternative to the use of heavy loads the tracks can be securely fixed to the ground by means of piles or the like and the trucks are secured to the tracks by suitable flanges on the truck wheels which are retained by complementary flanges on the tracks as shown in more detail in Figures 16b and 16c. Figure 16c also indicates an alternative ground anchorage system, using expanded tensile piles set in the ground at such depth and angle from the vertical as to resist multi-module full side tensile structural loading.

Removal of snow and/or ice from any of the stay cables of the support structures may be achieved by attachment of electric vibrators to the cables at points of maximum oscillation. Heavy snow or ice removal from the rigid lattice members may be achieved by enveloping the members in a reinforced plastics sheet covering within which warm air is circulated.

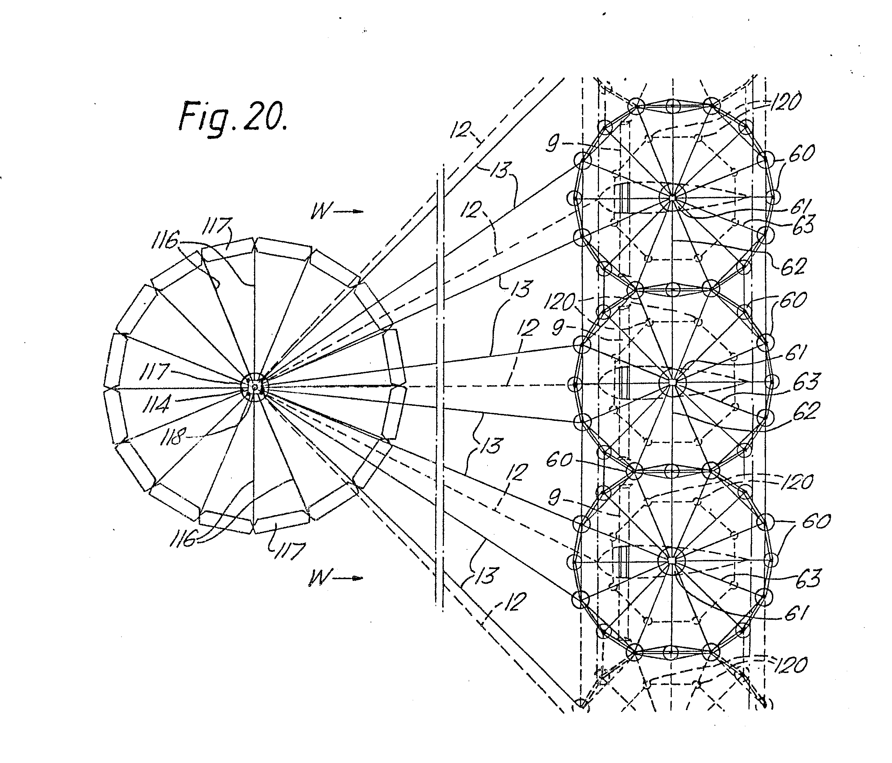

The greatest wind forces on the earth are to be found over the oceans and over coastal waters and the support structures of the invention are particularly suitable for use at sea or in any large area of water over which strong winds blow. One such embodiment for use in medium water depths of up to 500 to 600 ft is illustrated in Figure 19 of the drawings, in which the horizontal beam and tower construction is substantially as described with reference to Figure 1 and like reference numerals denote like parts. However, in this embodiment the tower is supported by semi-submersible flotation units 60 and 61. Suitably, the flotation unit 61 on which the tower stands forms the centre of a circle of which the flotation units 60 form the circumference. The flotation units 61 are joined together by longitudinal tensioned members 62 (see Figure 20), and are joined to the central flotation unit 61 by radial compressive members 63.

At sea the structure must not only withstand wind forces but also wave forces. In Figure 19 the sea level is indicated by the line marked S.L. while the broken line W indicates the approximate maximum wave height which may be, for example, 100 feet. Live structural stability and maximum wind/wave resistance is achieved by means of tension cables 12 and 13 which connect the structure to a primary sea-anchor system 114. The anchor comprises a steel lattice tower 115 which is rendered stable by means of diagonal tensile stays which connect the tower to piles 117 driven into the sea-bed or, alternatively, to massive concrete anchor blocks resting on the sea-bed.

The tension stays 12 and 13 are attached at one end to a rotating member 118 atop the anchor 114. The other end of stay 12 is connected to the front of the beam 1 while one of the stays 13 is connected to the flotation units 60 and the other to an adjustable anchor for the flotation units as described hereinafter.

As with the land-based embodiment, the support structure is able to move in a circular path about the anchor 114 so that the rotor can be maintained downwind of the anchor. The support structure may be moved by means of electrically (or hydraulically)-powered rudder propeller thrustors 119 which are affixed to the flotation units 60. There are a sufficient number of such thrustors to provide location movement and control of the structures under all sea and wind conditions.

In order to stablise the structure in any particular location on the circular path, there are provided anchors 120 which are adapted to rest on the sea-bed and which are connected to the flotation units 60 and 61 by means of cables 121. When it is desired to move the structure the anchors 120 may be raised from the sea-bed by applying a vertical lift to the flotation units 60 and 61 by means of vertical thrustors 122. This vertical lift may be supplemented by increasing the buoyancy of the flotation units with compressed air. Alternatively, winches may be provided for lifting the cables 121.

Suitably, a control room 123 is provided on the tower 2 for use in controlling the thrustors and anchors 120.

Figure 20 is a plan view showing a plurality of support structures of the kind shown in Figure 19 connected together to form a multi-modular array which is movable as a whole about the fixed anchor 114. Each support structure unit is interconnected with adjacent units in a manner similar to that described with reference to Figure 8 above.

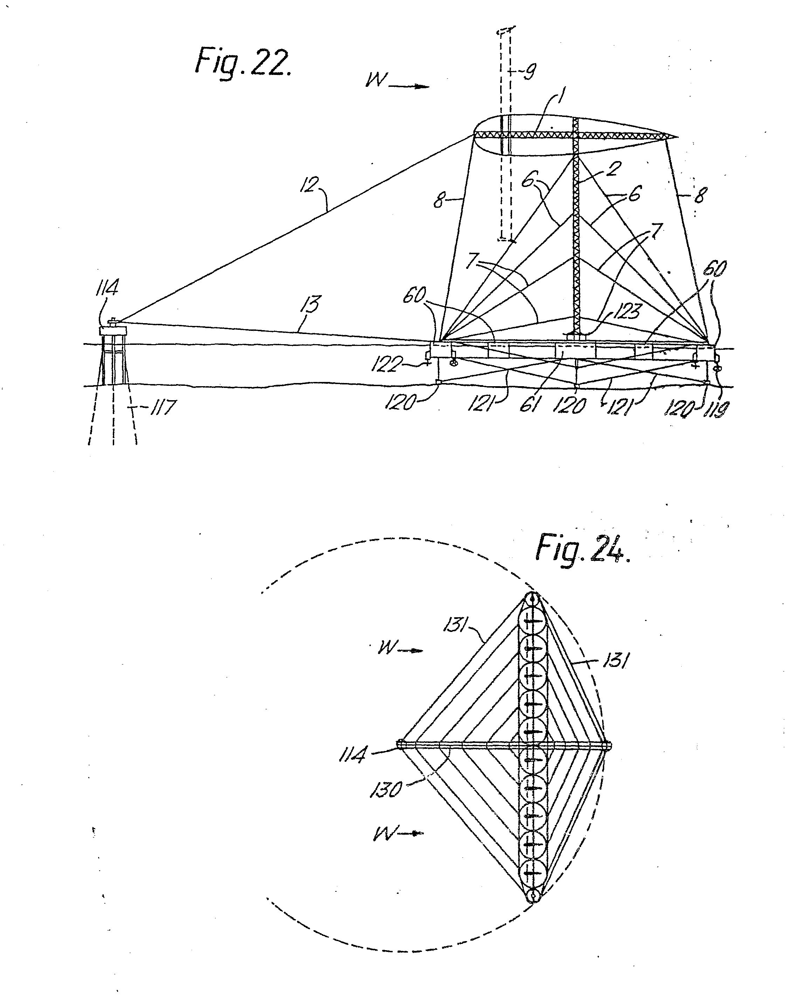

Figure 22 illustrates a support structure for use in extremely shallow water. In this embodiment the flotation units 60 and 61 are fully buoyant and float on the surface. The primary anchor member 114 consists of a simple platform firmly fixed to sea, lake or river bed by means of concrete piles 117.

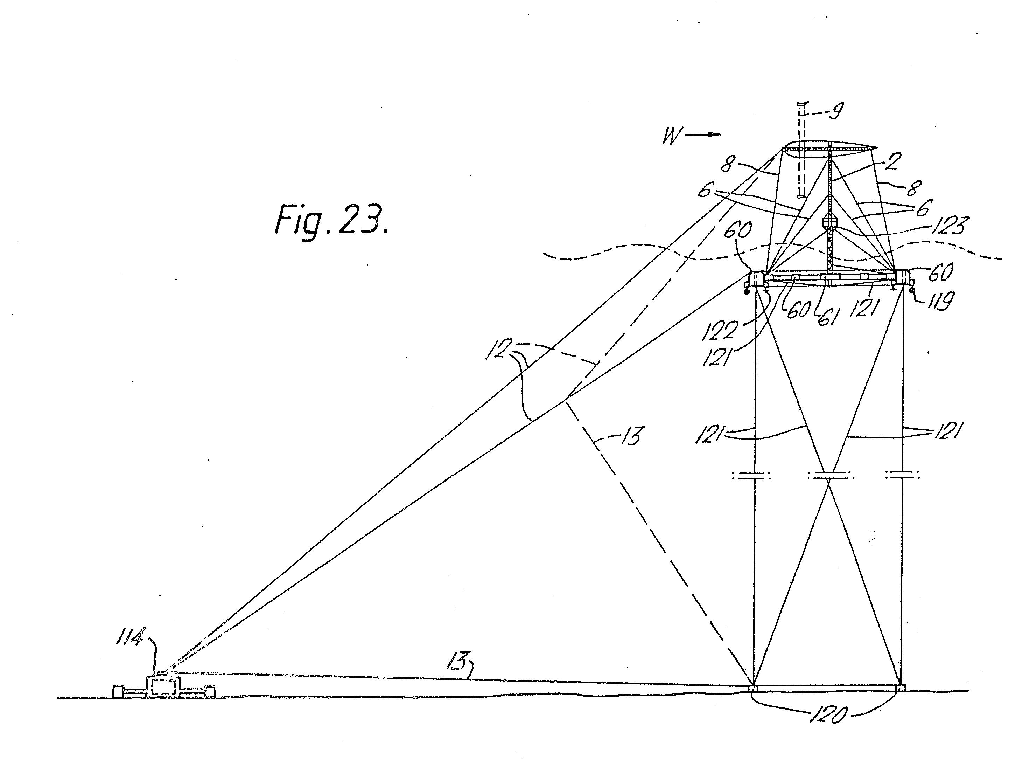

Figure 23 illustrates an embodiment of a structural support unit for use in relatively deep sea waters. In this embodiment, the semi-submersible flotation units 60 and 61 are built on a very large scale to resist larger wave and storm forces expected in deep waters. In this embodiment the anchor means 114 is also of extremely heavy design and is of the fully submerged type being fixed to the sea-bed by piles or other suitable methods.

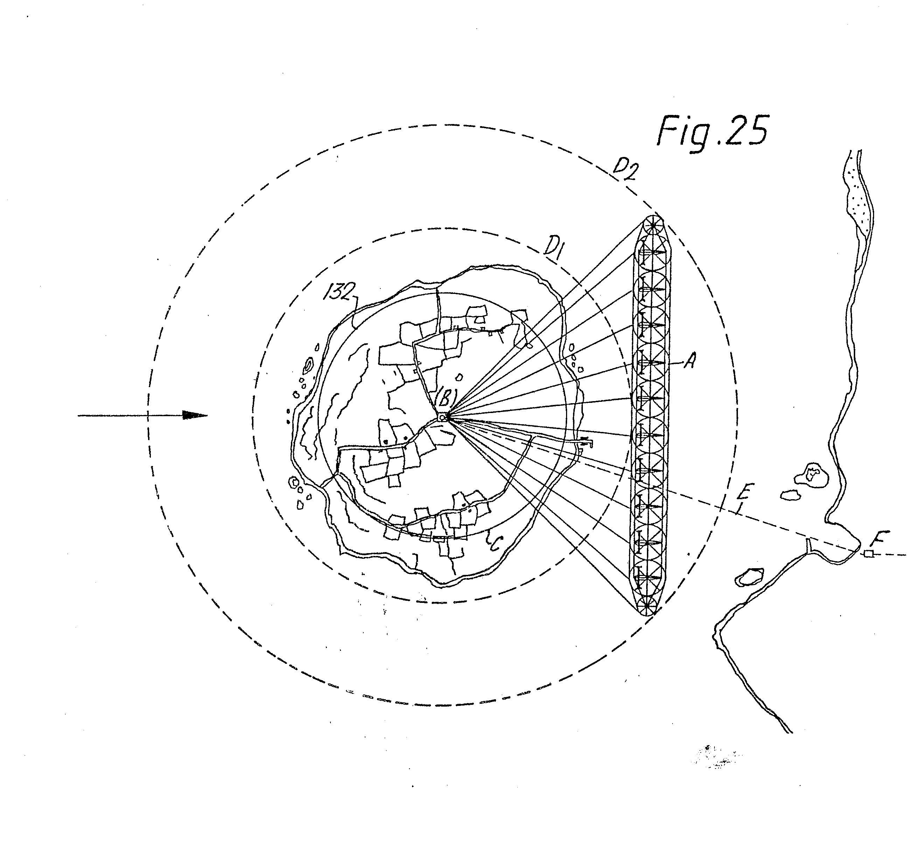

Figure 24 shows in diagrammatic plan a multi-modular system of support structures connected together as described in relation to Figure 20. However, in this embodiment the fixed anchor 114 is connected to the modular array by means of a rigid longitudinal floating member 130 which extends also to the leeward side of the array to provide increased horizontal structural rigidity by the use of diagonal tensile members 131 which connect the structure 130 to the individual support structures.

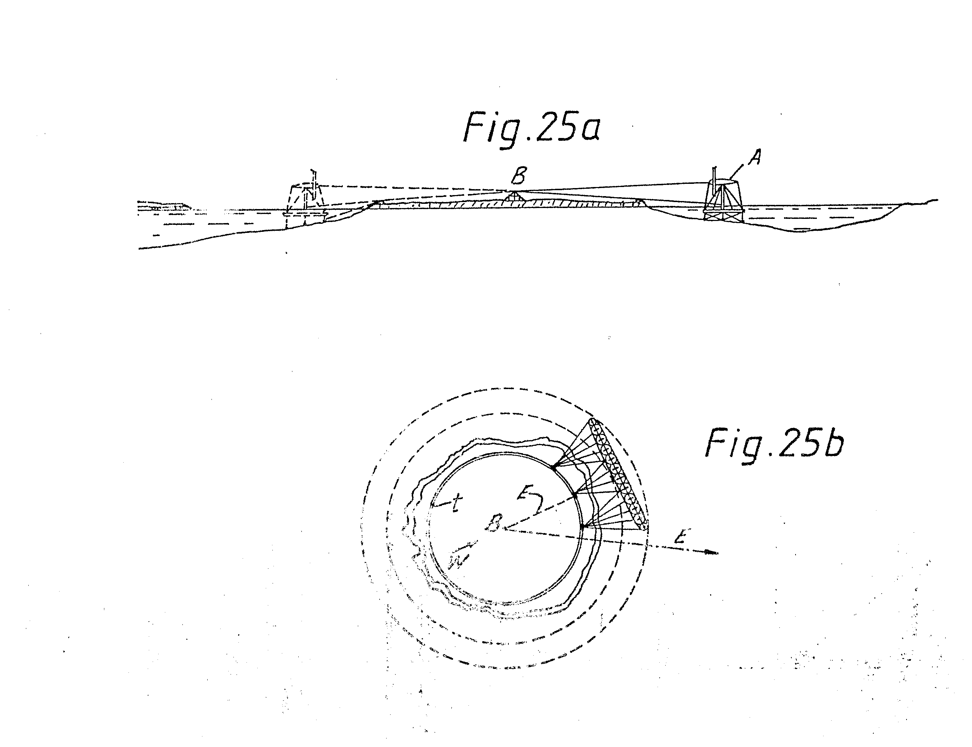

As is well known to students of physical geography coastlines subjected to ages of assault by wind and wave action, are invariably well indented and have many islands of all shapes and sizes, e.g. West coasts of Ireland and Scotland, European coasts of Norway, Denmark, N. Germany, Holland and N. France, N.E. coast of U.S.A. and Canada and the N.W. coast of U.S.A. and Canada. Many of these islands are small uninhabited windswept useless wastelands of rock and sand and no economic value to adjoining mainland. One of the objects of this invention is the conversion of these types of uninhabited windswept islands to major sources of Wind Generated Electric Power. Thus, as illustrated in Figure 25 of the drawings, an island (B) is used as the primary anchor means and control centre for a plurality of support structures of the invention arranged in a multi-modular array (A). The array (A) is connected to the anchor means (B) by means of tension cables 12, 13 such that the array may travel as a whole in a circular path about the island (B). The path of travel of the structures is indicated by the broken lines $D_1$ and $D_2$. In order to prevent the tension stays 12, 13 from damage or interference by rocks or the like, the stays are supported above ground level by means of a stressed cable 132 which is supported by a plurality of poles arranged in a circle around the anchor means. Electric power generated by the rotors may be conveyed to the mainland by undersea high voltage transmissions cables (E) to a mainland distribution centre (F).

An embodiment for use with an island of larger size is illustrated in Figure 25b in which the anchor means 14 comprises a plurality of loaded trucks of the kind described for example in Figure 18, which are movable on a circular or curved track system firmly fixed to the island's surface. Preferably, the track, t, is located at the perimeter of the island so that the tension stays 12, 13 may be kept to a reasonable length and are kept clear of rocks and the like. In the case of very large islands, the track need not be circular but can conform to the shape of the perimeter of the island.

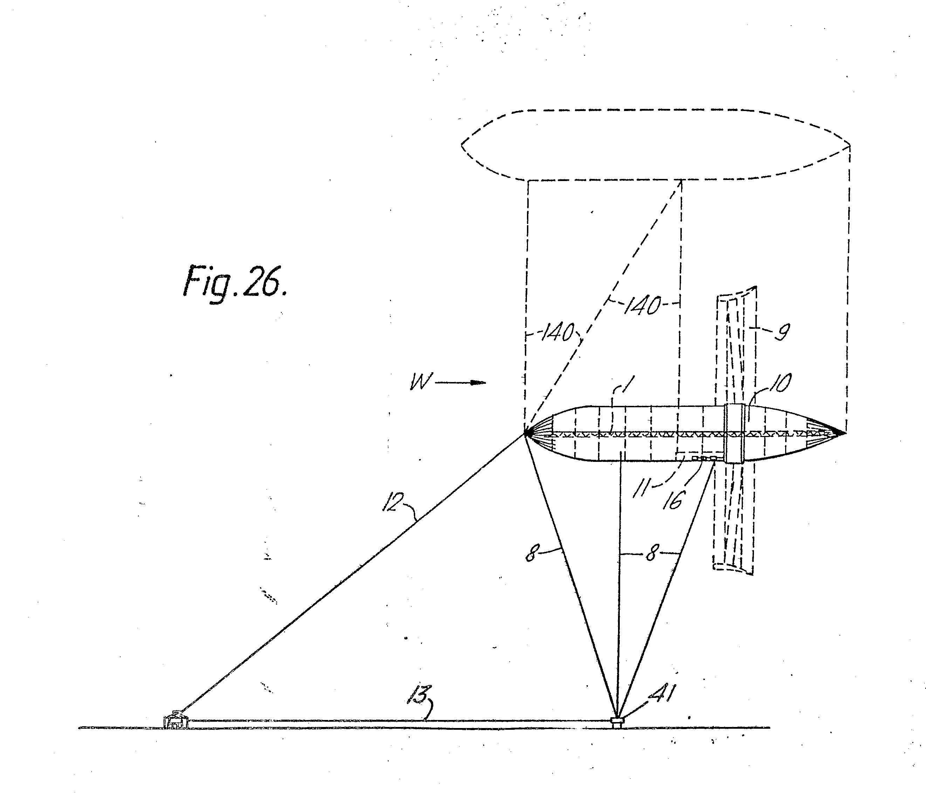

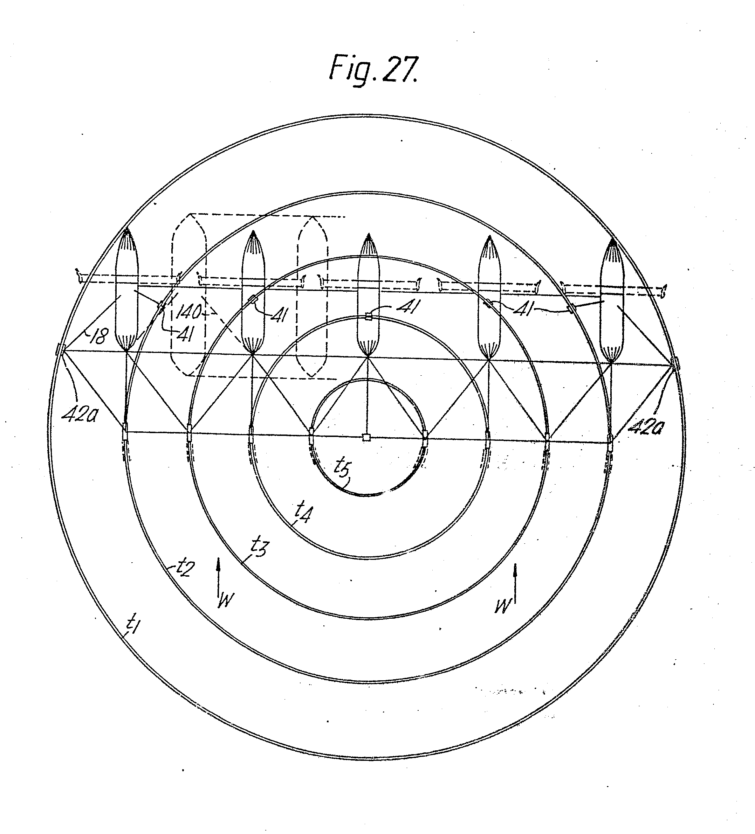

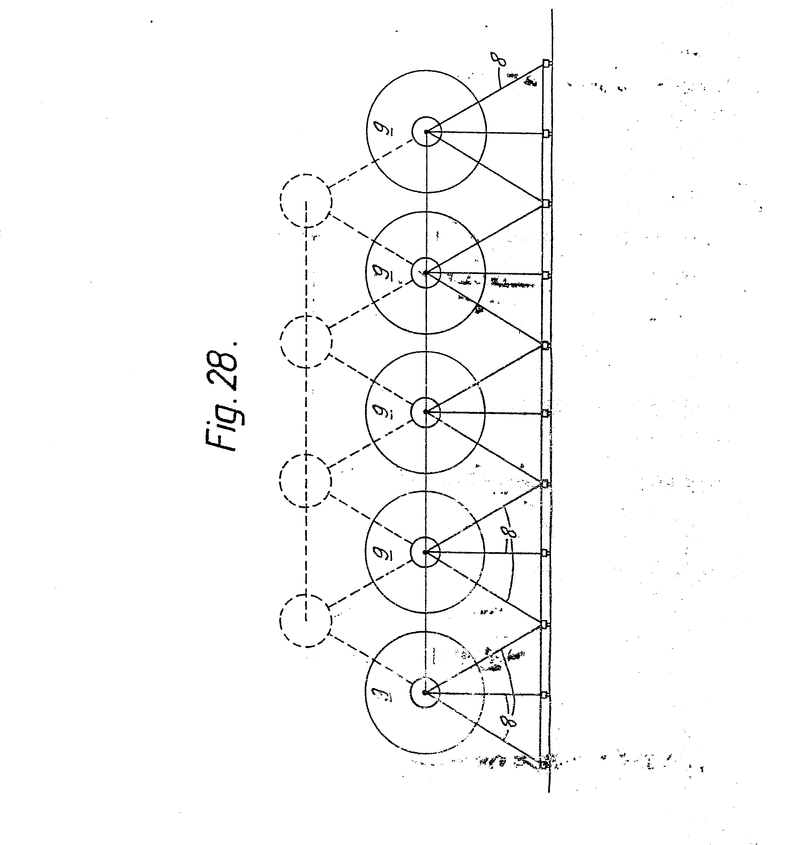

Yet further embodiments of the invention for use with extremely large wind turbines are illustrated in Figures 26 to 28. In these embodiments the support tower 2 is dispensed with and the beam 1 forms part of a lighter than air vehicle which preferably is of the air-ship type helium filled unit which is designed to carry the total load of the sytem. Preferably, an array of such airborne ships is used and these are moored to a rotary mobile anchorage system as described above in relation to Figures 13 and 14. The airborne structure is attached to the anchor means by means of tension stays 12, 13 and to movable trolleys 41 by tension stays 8. As illustrated in Figure 28, the mooring system of stays is based on $60^{o}$ triangulation for maximum stability. If desired, a secondary support for the airborne structure is provided by means of ancillary air-ships which are connected to the main airborne structure by means of cables 140.

## C L A I M S

1.   A support structure for a wind-powered electric generator comprising a substantially horizontal load-carrying beam located above the surface of the earth and adapted to carry a wind rotor and generator, characterised in that the beam (1) is anchored by means of a stabilising stay system comprised of at least one flexible cable (12, 13) connecting the beam to anchor means (14) located at the surface of the earth, and the beam (1) and/or the anchor means (14) are movable in an arc relative to each other whereby the beam (1) may be maintained substantially downwind of the anchor means with the rotor (9) facing substantially into the wind irrespective of the direction of the wind.

2.   A support structure according to claim 1, characterised in that the horizontal beam (1) is mounted on top of a vertical tower (2) to form a crane-like structure of the cantilever type which is mobile and is movable about a fixed anchor means (14) to which it is attached by means of the stabilising stay system (12, 13).

3.   A support structure according to claim 2, characterised in that the stabilising system comprises at least a first flexible cable (12) connecting the beam to the anchor means (14) and a second flexible cable (13) connecting the tower (2), adjacent the foot thereof, to the anchor means (14).

4.   A support structure according to claim 2, characterised in that the tower (2) is mounted on a mobile horizontal platform (3) on which it is supported by means of a plurality of stays connected between the tower and the platform, and the stabilising stay system comprises at least a first flexible cable (12) connecting the beam to the anchor means (14) and at least a second flexible cable (13) connecting the platform (3) to the anchor means (14) such that the platform (3) may move in a circular path about the anchor.

5.   A support structure according to claim 3 or 4, in which the vertical tower is movable along paths or tracks which are disposed in a circle of which the anchor means (14) defines the centre.

6.   A support structure according to claim 3 or 4, characterised in that the vertical tower (2) and the anchor means (14) are each movable on a common circular track, or on concentric circular tracks (t).

7. A suppor structure for a wind-powered electric generator as claimed in claim 1, characterised in that the tower (2) is located in a body of water, and is anchored by means of said stabilising stay system of flexible cables (12, 13) to anchor means (114).

8. A support structure as claimed in claim 7, characterised in that the tower (2) is mounted on a buoyant platform (60) floating in said body of water, or on a submersible or semi-submersible platform (60, 61).

9. A support structure as claimed in claim 7 or claim 8, characterised in that means are provided for temporarily securing the tower to a solid substrate located beneath the body of water, which when the body of water is the sea comprises the seabed, or when the body of water is a lake or river comprises the lake or river bottom.

10. A support structure according to claim 9, characterised in that said means for securing the tower comprises anchors (120) which may be raised or lowered on to said solid substrate by a system of cables (121) or the like.

11. A support structure according to claim 7, characterised in that the anchor means (114) is fixed to a solid substrate beneath the body of water, which when the body of water is the sea comprises the seabed, or when the body of water is a lake or river comprises the lake or river bottom, or is fixed to a rock, island or other land means located in or adjacent to said body of water.

12. A support structure according to claim 11, characterised in that the anchor means comprises a lattice tower (115) resting on said solid substrate and supported by means of a system of stays (116) connecting the lattice tower (115) to piles or the like.

13. A wind energy conversion system, characterised in that it comprises a plurality of support structures as claimed in any of the preceding claims connected together to form a multi-module array which is movable as a whole relative to anchor means (14, 114) to which each structure is connected by a stabilising stay system of flexible cables (12, 13).

14. A system as claimed in claim 13, characterised in that each tower (2) carrying a rotor-support beam (1) is mounted on a platform (3) by means of a plurality of stays (6, 7) connected between the tower (2) and the platform (3), and in that each platform is joined to an adjacent platform by means of tensioned longitudinal members (35) interconnecting the platforms to form a substantially linear multi-module array, and in that the tower (2) and beam (1) of each module are each connected to common anchor means (14, 114) by a stabilising stay system of flexible cables (12, 13), such that the multi-module array is movable as a whole in an arc relative to the anchor means (14).

15. A system as claimed in claim 14, characterised in that the platforms (3) are mounted on mobile trolleys (4) by means of which the multi-module array may be moved relative to the anchor means, and some of the trolleys (4) are common to adjacent platforms (3) to assist in interconnecting the platforms (3).

16. A system as claimed in claim 14, characterised in that each platform compris a plurality of rigid longitudinal members (3, 30a) which are connected to form the perimeter of the platform which in turn is connected to the foot of the tower (2) by radial members (31, 31a), and the beams (1) of each module of the array are interconnected by a system of tensioned stays (35a).

17. A system as claimed in claim 14, characterised in that the beams (1) of each module of the array are interconnected by means of substantially horizontall disposed braced rigid tensile beams (35b), and/or the towers (2) are interconnect by means of substantially horizontally disposed braced rigid tensile beams (35c), and in that secondary tensile cables (12a) connect said rigid tensile beams (35b, 35c) with the anchor means (14).

18. A system as claimed in claim 13, characterised in that each module of the array is movable along a circular track which is spaced from and concentric with the circular track on which the adjacent module is movable such that the whole array rotates on a plurality of parallel concentric tracks, and in that the anchor means (14) to which each module of the array is connected by the stay system (12, 13) is itself movable along a circular track concentric with said tracks along which the modules are movable.

19. A system as claimed in claim 18, characterised in that the tower (2) of each module is carried on a railway car (40) movable along the tracks which are in the form of railway tracks, and each tower-supporting railway car (40) is coupled to other rolling stock (41) carrying balancing weights.

20. A system as claimed in claim 19, characterised in that each tower is supported on a railway car (40) by means of stays (6, 7, 8) connecting the tower (2) and/or beam (1) to said rolling stock (41) to impart longitudinal stability to the tower (2), and that lateral stability for each tower (2) is obtained by means of stays connecting the tower (2) and/or beam (1) to rolling stock running on a track or tracks parallel to and concentric with the track on which the tower (2) moves.

21. A system as claimed in claim 13, characterised in that each tower (2) is mounted on a platform comprised of floats (60, 61) and is supported on said platform by means of a plurality of stays (6, 7) connected between the tower (2) and the platform, and in that each platform is joined to an adjacent platform by means of tensioned longitudinal members (35a) interconnecting the platforms to form a substantially linear multi-module array, and in that the tower (2) and beam (1) of each module are each connected to anchor means (114) by a stabilising stay system of flexible cables (12, 13), such that the multi-module array is movable as a whole substantially in an arc relative to the anchor means (114).

22. A system as claimed in claim 21, characterised in that each platform comprises a central flotation unit (61) on which the tower (2) stands surrounded by a plurality of flotation units (60) forming the periphery of the platform and each of which is connected to the central unit by means of radial compressive members (63), and are joined together by means of longitudinal tension members (62), and in that some of the floats (60) are common to adjacent platforms to assist in interconnecting the platforms.

23. A system as claimed in claim 21, characterised in that a rigid longitudinal floating member (130) extends transversely of the multi-module array and is connected to each module by diagonal tensile members (131), one end of said floating member being rotatably connected to the anchor means (114).

24. A support structure for a wind-powered electric generator as claimed in claim 1, characterised in that the horizontal beam (1) is carried above the surface of the earth by a lighter than air vehicle.

25. A support structure for a wind-powered electric generator or a wind energy conversion system as claimed in any of the preceding claims, characterised in that the flexible cables (12, 13) of the stabilising stay system are sheathed polyamide filaments.

26. A structure or system as claimed in claim 53, characterised in that the sheathed polyamide filaments are of the kind sold under the trade names "PARAFIL and "KEVLAR".

27. A support structure as claimed in claim 1, characterised in that the beam (1) is surrounded by a plurality of fixed circular support members (23) which support a cone-shaped membrane (24) which covers the beam (1).

28. A support structure as claimed in any of the preceding claims, characterise in that it includes a rotor mechanism comprising a rotary ring (50) and having fixedly attached thereto a plurality of main gear wheels (50) supporting the rotor blades (9), a support means for the ring comprising a plurality of rotatable pneumatic wheels (19) arranged in a circle about the main beam (1) and in fixed relation thereto, the wheels (19) being in frictional contact with tracks (51) on the inner surface of the rotary ring (50) such that rotation of the ring (50) causes the wheels (19) to rotate, and secondary gear wheels (18) for transmitting drive from the main gear wheels (17) to a drive shaft driving at least one generator.

29. A support structure as claimed in claim 28, characterised in that the pneumatic wheels are conventional twin pneumatic tyred truck wheels (19), which exten around the inner perimeter of the rotary ring (50) and are held in fixed relation to the beam (1) by means of radial spokes (52), and are provided with drum or disc brakes, and wherein frictional connection between the pneumatic wheels (19) and tracks (51) can be adjusted by varying the air pressure of the pneumatic wheels.

Fig.1

W

1/32

0015131

Fig.2

Fig.3

Fig. 4.

Fig.5

0015131

Fig.6

Fig.6a

Fig.6b

Fig.7a

Fig.7

Fig.8

Fig.9.

Fig. 9a.

Fig.10

Fig. 10a.

Fig. 11

4a

4a

12
12
13
13
12
13
13
12
13
12
13

14

$t_1$ $t_2$ $t_3$ $t_4$ $t_5$ $t_6$ $t_7$ $t_8$ $t_9$ $t_{10}$ $t_{11}$

$\dfrac{t}{(1-11)}$

$t_{11}$ $t_{10}$ $t_9$ $t_8$ $t_7$ $t_6$ $t_5$ $t_4$ $t_3$ $t_2$ $t_1$

$\dfrac{t}{(1-11)}$

13/32

0015131

14/32

Fig. 12.

Fig.13

0015131

Fig.13a

Fig.13b

Fig.13c

Fig. 14

Fig.14a

Fig.15.

Fig.15a

21/32

*Fig.16*

*Fig.17*

42a *Fig.18*

22/32

Fig.16a

Fig.16b

Fig.16c

Fig. 19.

23/32

0015131

0015131

24/32

Fig. 20.

Fig.21

Fig.22.

W →

9

1

12

8   6   2   6   8

7   7

60   60

123

122

120   121   61   120   121   120   119

13

114

117

Fig.24.

131

W →

131

114

130

W →

Fig. 23.

Fig.25

## Fig.25a

## Fig.25b

Fig.26.

Fig.27.

# Fig. 28.

0015131

| Category | DOCUMENTS CONSIDERED TO BE RELEVANT | |
|---|---|---|
| | Citation of document with indication, where appropriate, of relevant passages | Relevant to claim |
| | US - A - 4 035 658 (DIGGS) <br> * Column 2, line 59 to column 3, line 9 * <br> -- | 1,13 |
| | FR - A - 2 307 981 (ROUGET) <br> * Page 9, line 12 to page 10, line 13 * <br> -- | 1,13 |
| | FR - A - 542 172 (DUREY) <br> * Page 1, line 40 to page 3, line 11 * <br> -- | 1,7 |
| | DE - C - 830 628 (HEUBECK) <br> * Page 1, line 17 to page 2, line 64 * <br> -- | 1,2,3 |
| | ELECTRONICS & POWER, vol. 22, August 1976, Hitchin. Herts, GB MENSFORTH "Wind-power generation on a large scale, a design idea", page 530 to 532. <br> * Page 531 * <br> -- | 28 |
| A | FR - A - 434 289 (LAUNAY) | |
| A | FR - A - 688 774 (DARCHE) | |
| A | DE - C - 359 555 (KROGER) | |
| A | DE - C - 397 391 (LANNINGER) | |
| A | DE - C - 2 750 248 (LIES) | |

CLASSIFICATION OF THE APPLICATION (Int. Cl. )

F 03 D 11/04
F 03 D 1/02

TECHNICAL FIELDS SEARCHED (Int.Cl )

F 03 D 1/00
F 03 D 11/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

X The present search report has been drawn up for all claims

| Place of search | Date of completion of the search | Examiner |
|---|---|---|
| The Hague | 20-05-1980 | DAVID |

EPO Form 1503.1  06.78